# EUROPEAN PATENT SPECIFICATION

(11) **EP 1 007 588 B1**
(45) Date of publication and mention of the grant of the patent: **11.08.2004**
(21) Application number: 98939385.5
(22) Date of filing: 13.08.1998
(51) Int. Cl.: C08K 5/43, C08L 23/10

(54) **IN-SITU RHEOLOGY MODIFICATION OF POLYOLEFINS**
IN-SITU VERÄNDERUNG DER RHEOLOGIE VON POLYOLEFINEN
MODIFIATION RHEOLOGIQUE IN-SITU DE POLYOLEFINES

(30) Priority: 27.08.1997 US 57713 P
(43) Date of publication of application: 14.06.2000
(73) Proprietor: THE DOW CHEMICAL COMPANY, Midland, Michigan 48674 (US)
(72) Inventor: SILVIS, H., Craig, Midland, MI 48642 (US); CUMMINS, Clark, H., Midland, MI 48642 (US); MULLINS, Michael, J., Lake Jackson, TX 77566 (US); SAMMLER, Robert, L., Midland, MI 48640 (US)
(74) Representative: Böhm, Brigitte, Dipl.-Chem. Dr.
(86) International application number: PCT/US1998/016783
(87) International publication number: WO 1999/010424

(56) References cited:
- US-A- 3 336 268
- US-A- 3 377 415
- US-A- 3 530 108

## Description

This invention relates to polyolefins, more particularly to the reaction of polyolefins with poly(sulfonyl azide)s.

As used herein, the term "rheology modification" means change in the resistance of the molten polymer to flow. The resistance of polymer melts to flow is indicated by (1) the tensile stress growth coefficient and (2) the dynamic shear viscosity coefficient. The tensile stress growth coefficient ηE+ is measured during start-up of uniaxial extensional flow by means within the skill in the art such as is described by J. Meissner in Proc. XIIth International Congress on Rheology, Quebec, Canada, August 1996, pages 7-10 and by J. Meissner and J. Hostettler. Rheol. Acta. 33, 1-21 (1994). The dynamic shear viscosity coefficient is measured with small-amplitude sinusoidal shear flow experiments by means within the skill in the art such as described by R. Hingtnann and B. L. Marczinke, J. Rheol. 38(3). 573-87. 1994.

Polyolefins are frequency rheology modified using nonselective chemistries involving free radicals generated for instance using peroxides or high energy radiation. Although these techniques are useful for polyethylene and some copolymers thereof, chemistries involving free radical generation at elevated temperatures tend to degrade the molecular weight of polypropylene and its copolymers, due to the high rate of chain scission reactions at tertiary carbon atoms along the polymer backbone, which scission often dominates chain coupling and leads to lower rather than higher molecular weight polymer chains. The reaction of polypropylene with peroxides and pentacrythritol triacrylate as reported by Wang et al., in Journal of Applied Polymer Science, Vol. 61, 1395-1404 (1996). They teach that branching of isotactic polypropylene can be realized by free radical grafting of di- and tri-vinyl compounds onto polypropylene. However, this approach does not work well in actual practice as the higher rate of chain scission tends to dominate the limited amount of chain coupling that takes place. This occurs because chain scission is an intra-molecular process following first order kinetics, while branching is an inter-molecular process with kinetics that are minimally second order. Chain scission results in lower molecular weight and higher melt flow rate than would be observed were the branching not accompanied by scission. Because scission is not uniform, molecular weight distribution increases as lower molecular weight polymer chains referred to in the art as "tails" are formed.

Another approach to rheological modification taught in the patent literature involves electron beam irradiation of isotactic polypropylene at lower temperatures (for example EP0190889 assigned to Himont Incorporated). This process is costly since a source of e-beam irradiation must be added to the polypropylene process equipment, the irradiation must be done in the solid phase in an inert atmosphere, and macroradicals in the product must be deactivated prior to melt processing to avoid chain scission reactions. With free radicals present, scission is expected.

The art includes various free radical methods reported to rheologically modifty such polymers as polypropylene. For instance, DcNicola et al. report in U.S. Patent 5,414,027 the use of high energy (ionizing) radiation in a reduced oxygen atmosphere to form free radicals. Although the melt strength of the polymer is improved. DeNicola et al. state that the irradiation results in chain scission, even though there is recombination of chain fragments to reform chains, as well as joining of chain fragments to chains there can be a net reduction in weight average molecular weight between the starting material and the end product. In general the starting material intrinsic viscosity which is indicative of molecular weight should be from 1-25, preferably 2-6, to result in an end product with intrinsic viscosity of 0.8-25, preferably 1-3.

Methods of altering the polymer structure and the associated rheology of polyethylenes do not work well for polyolefins which have tertiary hydrogens on their backbones. Most of the methods involve free radicals which cleave the backbone of polyolefins having tertiary hydrogens, that is hydrogen atoms bonded to carbon atoms which are in turn bonded to three other carbon atoms such that when the hydrogen is abstracted a tertiary, therefore stable, free radical is formed. Polypropylene, including copolymers of propylene with other alpha olefins, is the preferred example of such polymers having tertiary hydrogen atoms. Polypropylene polymers are particularly susceptible to chain scission because of the formation of tertiary radicals. Polymers of styrene also stabilize free radicals and are, thus, subject to chain scission.

Blending polypropylene with other materials has also been employed in an effort to improve its melt strength properties, however, due to differences in refractive indices, the products have poor optical properties such as haze and transmittance. Thus, a need exists for a more selective way to rheology modify polypropylene that does not lead to significant decreases in molecular weight or require blending and thus, diminished physical properties.

The teachings of US 3,058,944; 3,336.268; and 3,530,108 include the reaction of certain poly(sulfonyl azide) compounds with isotactic polypropylene or other polyolefins by nitrene insertion into C-H bonds. The product reported in US 3,058,944 is crosslinked. The product reported in US 3,530,108 is foamed and cured with cycloalkane-di(sulfonyl azide) of a given formula. In US 3.336,268 the resulting reaction products are referred to as ''bridged polymers" because polymer chains are "bridged" with sulfonamide bridges. The disclosed process includes a mixing step such as milling or mixing of the sulfonylazide and polymer in solution or dispersion then a heating step where the temperature is sufficient to decompose the sulfonylazide (100°C to 225°C depending on the azide decomposition temperature). The starting polypropylene polymer for the claimed process has a molecular weight of at least 275,000. Blends taught in US 3.336,268 have up to 25 percent ethylene propylene elastomer. "Bridged" products obtained from the process disclosed in US 3.336.268 exhibit less rheology modification than is desirably obtained and tend to have at least one of lower ductility, break tensile strength, flex modulus. Izod impact strength or MTS Peak impact energy than is desirable. Canadian Patent 797,917 discloses certain similarly bridged polyethylenes.

Functionalized sulfonyl azides, particularly sulfonyl azido siloxanes, have been employed as compatibilizers for blends and composites, and function by grafting on to one of the components by way of sulfonyl azide chemistry as reported in US Patents 3,616,199 (Breslow), US Patents 4,452,855 (Brodsky et al.) and 3,706,592 (Thomson).

An isotactic or syndiotactic polypropylene having sufficient rheology modification to avoid the extent of sag seen in a corresponding unmodified polypropylene of the same tacticity, advantageously at temperatures useful in thermoforming processes, advantageously of at least 370 °C, preferably at least 380 °C, more preferably at least 400 °C would be very desirable; preferably the rheology modified isotactic polypropylene would be more processable (of higher melt flow rate) than that formed in the practice of US 3,336,268. Alternatively, it would be desirable to have a greater theology modification than is obtained in practice of the process disclosed in US 3,336,268 or to have at least one of higher ductility, break tensile strength, flex modulus, Izod impact strength or MTS Peak impact energy than is obtained by practice of the disclosed method. Alternatively it would be desirable to have thermoplastic elastomers (TPE) and thermoplastic polyolefins (TPO) of high impact strength (preferably higher, than 300 inch-pound (34 Joules) as determined by ASTM D33763-93) having greater interfacial compatibility than mere blends of the constituent polymers, preferably having sufficient copolymers or blended with sufficient polypropylene to achieve the high impact strength, that is preferably having a propylene polymer and another polymer having more than 25 weight percent polyethylene or ethylene/alpha-olefin copolymer different from polypropylene. It would also be desirable to have a one step or one vessel process to prepare theology modified isotactic polypropylene.

The present invention includes an improved process for the preparation of rheology modified polyolefins, either alone or as blends, that remain thermoplastic and melt processable and possess improved melt strength and other physical properties advantageous for applications such as large part thermoforming, blow molding, foaming and injection molding.

The invention includes a process of preparing a rheology modified polyolefin, comprising a step of
(a) mixing at least one polyolefin with a rheology modifying amount of a poly(sulfonyl azide) at a temperature, referred to hereafter as a mixing temperature which is at least the softening temperature of the polyolefin but less than the decomposition temperature of the poly(sulfonyl azide) to form a substantially uniform admixture of polyolefin and poly(sulfonyl azide); and
(b) heating the substantially uniform admixture of polyolefin and poly(sulfonyl azide) to a temperature, referred to hereafter as a reaction temperature, which is at least the decomposition temperature of the poly(sulfonyl azide); and
(c) extruding the rheology modified polyolefin through a die to form an article capable of being made into pellets, steps (a) and (b) taking place in an extruder and the extruding step of (c) taking place from the same extruder used for (a) and (b).

Especially, step (b) takes place at a temperature at least 5°C above the mixing temperature and at least the peak decomposition temperature of the poly(sulfonyl azide) and the admixture especially contains from 0.01 to 0.5 weight percent of poly(sulfonyl azide),

The process of the invention is particularly applicable to polyolefins which compose greater than 50 mole percent monomer having at least one tertiary hydrogen atom, preferably propylene polymers, more preferably where the propylene polymer has a molecular weight less than 275,000,most preferably wherein the molecular weight is greater than 100.000 and less than 250,000. The polyolefin optionally comprises an admixture, hereinafter blend, of at least one non-elastomeric polymer and at least one elastomeric polymer, wherein the non-elastomeric polymer is preferably a propylene polymer.

The process preferably includes, at least three temperatures including the mixing and reaction temperatures, preferably between 160°C and 230°C each temperature differing from the others by at least 5°C, at least one reaction temperature being at least 5°C above the decomposition temperature of the poly(sulfonyl azide) and at least one mixing temperature being at least 5°C above the softening temperature of the polyolefin and at least 5°C below the decomposition temperature of the poly(sulfonyl azide), and all three temperatures occurring within a single vessel.

The invention also includes a composition prepared by the process of the invention in any of its embodiments, said composition preferably comprising at least one rheology modified polyolefin made by a process comprising a step of (a) heating a substantially uniform admixture of a polyolefin and a rheology modifying amount of a poly(sulfonyl azide) to a temperature, referred to hereafter as a reaction temperature, which is at least the decomposition temperature of the poly(sulfonyl axide), which composition advantageously has a higher melt strength in extensional flow or casier melt flow at high shear rate, compared to polymer of the same weight average molecular weight (Mw) having linear chains and the same composition except for the coupled chains; wider temperature range for thermoforming or higher crystallization temperature than the starting material polymers or polyolefins.

The invention additionally includes a composition comprising a rheology modified isotactic polypropylene (iPP) or rheology modified isotactic polypropylene/elastomer material which is the reaction product of at least one isotactic propylene polymer and optionally at least one elastomeric polymer with from 0.01 to 0.5 weight percent based on total polymer of a poly(sulfonyl azide) wherein at least one of the polymers is in a substantially uniform admixture with the poly(sulfonyl azide) before it reacts with the propylene polymer.

Also the invention includes a blend composition comprising any composition or the invention or any composition prepared by any process of the invention, said blend preferably having greater impact strength than would a blend of the same components not rheology modified or chain coupled using a poly(sulfonyl azide).

Moreover, the invention includes any article which is thermoformed, injection molded, extruded, cast, blow molded, blown, foamed or molded articles of any composition of the invention or prepared by a process of the invention as well as any article which is a foam, film or fiber of any composition of the invention or prepared by a process of the invention, especially where that article is a pickup bed liner or refrigerator part, tub, or container.

The invention, thus, includes a process for preparing a rheology modified polyolefin, comprising a step (a) of reacting a polyolefin having a molecular weight less than 275,000 as measured by high temperature gel permeation chromatography with a poly(sulfonyl azide); that is of contacting such a polyolefin and poly(sulfonyl azide) under reaction conditions. The polyolefin is preferably a propylene homopolymer or copolymer.

The invention also includes a process which preferably takes place using a profile of temperatures and more preferably the heating step has a reaction time sufficient for decomposition of at least 80 mole percent of the poly(sulfonyl azide), most preferably for a time corresponding to at least 2 minutes at 230°C and at least 4 minutes at 200°C. The process preferably takes place in an extruder having a die through which polymer is transported by at least one screw, an input means for polymer an exit where the extruded polymer leaves the die, and a midpoint between the input means and exit: wherein the screw has more high shear mixing elements between the input means and the midpoint than it has between the midpoint and the exit, which extruder and screw are also aspects of the invention. The polymer preferably comprises at least one propylene polymer more preferably is a propylene polymer, which most preferably has a molecular weight less than 275,000. In an alternative embodiment, the polyolefin comprises a mixture of at least one non-elastomeric polymer and at feast one elastomeric polymer.

Additional aspects of the invention include compositions made by the process as well as a composition comprising at least one non-elastomeric first polymer and at least one second polymer which is an elastomeric polymer or polyolefin and which is at least 40 weight percent ethylene repeating units and 0.01 to 0.5 weight percent based on total polymer of poly(sulfonyl azide). An additional aspect of the invention includes a composition comprising a rheology modified isotactic polypropylene (iPP) or rheology modified isotactic polypropylene/elastomer material which is the reaction product of at least one isotactic propylene polymer and optionally at least one elastomeric polymer with from 0.01 to 0.5 weight percent based on total polymer of a poly(sulfonyl azide) wherein at least one of the polymers is in a substantially uniform admixture with the poly(sulfonyl azide) when the decomposition temperature of the poly(sulfonyl azide) is reached. Blends which comprise any composition of the invention with at least one additional polymer are also aspects of the invention. These blends preferably have greater impact strength than would a blend of the same components not rheology modified or chain coupled using a poly(sulfonyl azide). Articles formed from any composition of the invention, especially where the article is thermoformed, injection molded, extruded, cast, blow molded, blown, foamed or molded or is a foam, film or fiber are included within the invention as is the use of any composition of the invention in any process of thermoforming, extrusion coating, injection molding, extrusion, casting, blow molding, foaming, film forming or blowing. The invention additionally includes a process of contacting at least one polyolefin with a poly(sulfonyl azide) in a single vessel wherein the contact includes mixing at a temperature at least the softening temperature, preferably below the decomposition temperature of the poly(sulfonyl azide), and, preferably followed by, exposure to at least one temperature at which the poly(sulfonyl azide) decomposes. The vessel is preferably an extruder. The polymer is preferably other than solid bulk or solid particulate form, more preferably melted or molten form rather than in solution or dispersion for the mixing.

In the invention the polyolefin is optionally a homopolymer, copolymer, interpolymer, or blend, but preferably includes at least one propylene polymer.

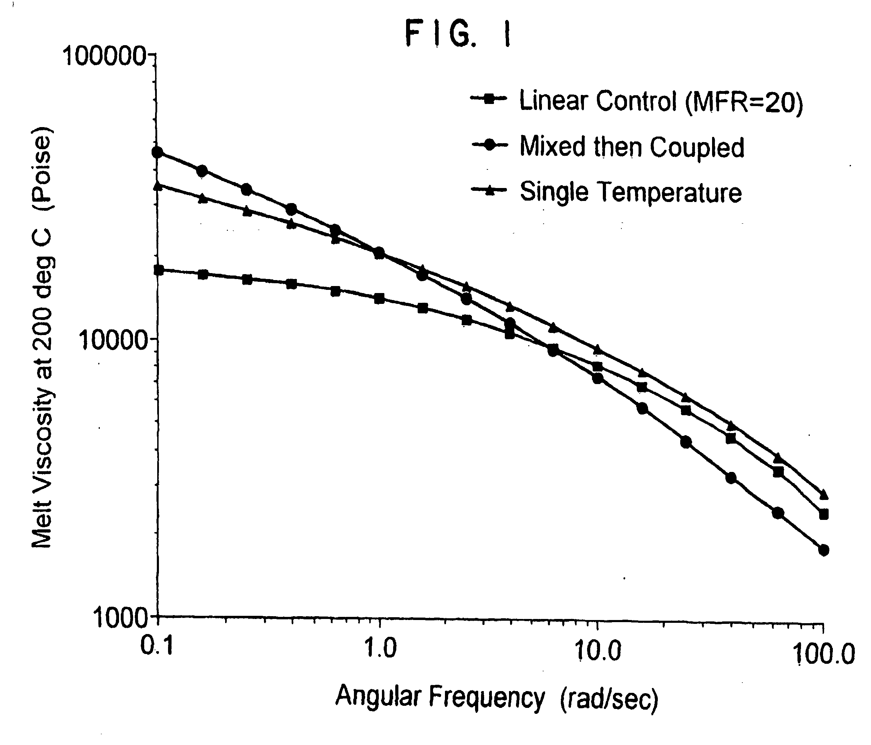

Figure 1 shows a comparison of shear viscosities of chain coupled propylene polymer formed in fixed temperature vs. profiled temperature mixing devices.

Practice of the invention is applicable to any polyolefin particularly a polyolefin having at least one tertiary hydrogen atom, that is a polymer of alpha olefins having more than 2 carbon atoms (having a structure RCH=CH₂ where R is aliphatic or aromatic and has at least one and preferably less than 8 carbon atoms which olefins polymerize to form backbones with tertiary hydrogen atoms). Such alpha olefins are optionally copolymerized with ethylene, other hydrocarbon monomers within the skill in the art, that is hydrocarbons having one or more double bonds at least one of which is polymerizable with the alpha olefin monomer or a combination thereof.

Alpha olefins having more than 2 carbon atoms include propylene, 1-butene, 1-pentene, 1-hexene, 1-octene, 1-nonane, 1-decene, 1-unidecene, 1-dodecene as well as 4-methyl-1-pentene, 4-methyl-1-hexane, 5-methyl-1-hexane, vinylcyclohexane, styrene and the like. The preferred alpha olefin is propylene, which is optionally copolymerized with other addition polymerizable monomer(s). preferably olefin(s), more preferably alpha olefin(s) including ethylene or combinations thereof. Not only are polypropylene polymers very difficult to modify using free radicals because of the formation of tertiary radicals and the resulting chain scission, but also propylene repeating units have less steric. hindrance than larger repeating units. Of the propylene polymers, those with chains of isotactic or syndiotactic polypropylene are preferred over atactic for practice of the invention, and isotactic is more preferred because of its higher melting point and utility in packaging and durable applications. Similarly, styrene and substituted styrenes like alpha-methyl styrene are subject to chain scission when rheology modified with free radicals and are, therefore, preferred embodiment starting materials for practice of the present invention.

Optionally, but not in the most preferred embodiment, the polymers have monomers having at least two double bonds which are preferably dienes or trienes. Suitable diene and triene comonomers include 7-methyl-1,6-octadiene, 3,7-dimethyl-1,6-octadiene, 5,7-dimethyl-1,6-octadiene, 3,7,11-trimethyl-1,6.10-octatriene, 6-methyl-1,5-heptadiene, 1,3-butadiene, 1,6-heptadiene, 1,7-octadiene; 1,8-nonadiene, 1,9-decadiene, 1,10-undecadiene, norbornene, tetracyclododecane, or mixtures thereof, preferably butadiene, hexadienes, and octadienes, most preferably 1,4-hexadiene, 4-methyl-1,4-hexadiene, 5-methyl-1,4-hexadiene, dicyclopentadiene, and 5-ethylidene-2-norbornene.

Polyolefins are formed by means within the skill in the art. The alpha olefin monomers and optionally other addition polymerizable monomers are polymerized under conditions within the skill in the art, for instance as disclosed by Galli, et al., Angew. Macromol. Chem.. Vol. 120, p. 73 (1984), or by E. P. More, et al. in Polypropylene Handbook, Hanser Publishers, New York, 1996, particularly pages 11-98. Starting material polyolefins are preferably lacking measurable, demonstrable long chain branches, that is having less than 0.01 long chain branches or coupled chains, per 1000 carbon atoms such as are measured by the methods described by Randall in Rev. Macromol. Chem. Physic., C29. V. 2&3, p. 285-297 and Zimm et al. J. Chem. Phys. 17, 1301 (1919) and Rudin, Modern Methods of Polymer Characterization, pp. 103-112 John Wiley & Sorts. NY 1991.

The monomers are used in any relative quantities, but preferably with a majoriry of monomer having tertiary hydrogen (greater than 50 mole percent, monomer having at least one tertiary hydrogen atom), more preferably with a majority (greater than 50 mole percent) of the monomers being propylene, most preferably at least 90 mole percent propylene. Polymers having at least 50 mole percent propylene units are referred to herein as propylene polymers or polypropylenes.

Optionally, however, the practice of this invention includes other hydrocarbon polymers such as polystyrene, poly(styene-co-acrylonitrile), polyvinylcyclohexane, polybutadiene, polyisoprene, cyclic olefin copolymers and copolymers. and the like, and mixtures thereof Polymers having at least 50 mole percent styrene or substituted styrene units are referred to herein as styrenic polymers.

The polymer starting materials are suitably of any molecular weight distribution (MWD). For instance, polymers of narrow MWD are formed by means within the skill in the art and used in a process of the invention to produce chain coupled polymers of advantageously narrower MWD than would be formed in a coupling process involving chain scission for example by free radicals with the same starting materials. Alternatively, a polymer or copolymer of broader MWD used as a starting material in the practice of the invention results in a product having a similarly broad MWD rather than the typically narrow MWD observed in branched products formed with metallocene or constrained geometry catalysts known to result in both branching and narrow MWD.

It is however preferred that the starting material polymers have a narrow molecular weight distribution because the melting point is broadened after coupling according to practice of the invention more than is observed for broader MWD starting material polymers. This broadness melting point widens the processing window for fabrication such as thermoforming, blow molding, film and foam making. Preferably the starting polymer MWD is less than 4.0 more preferably, less than 3.0 most preferably less than 2.5.

Optionally, polymers to be used as starting materials in the practice of the invention are blends of polymers. Preferably, each polymers in the blend is independently selected from the polyolefins described above. More preferably, at least one of the polymers is a propylene polymer. Most preferably, at least one polymer is a propylene polymer and at least one polymer is a homo- or co-polymer of ethylene with at least one other addition polymerizable monomer, preferably at least one olefin, more preferably at least one alpha olefin, most preferably propylene.

In the case of blends, particularly TPO's and TPE's more than one polymer, preferably polyolefin, is used. In TPO materials, preferably ethylene/alpha-olefin copolymer (preferably at least 40 weight percent ethylene) is dispersed in or co-continuous with a for example polypropylene phase. A TPE is a phase separated polymer containing distinct hard and soft segments, where the hard segments reinforce the soft phase, but it is not crosslinked into a network, that is it is still thermoplastic; preferred TPE materials possess a polypropylene phase dispersed in an ethylene/alpha-olefin elastomer.

In the practice of the invention, the polyolefin is reacted with a chain coupling agent which is a poly(sulfonyl)azide. When the poly(sulfonyl)azide reacts with the polyolefin, at least two separate polyolefin chains are advantageously joined and molecular weight of the polymer chain is increased. In the preferred case when the poly(sulfonyl azide) is a bis(sulfonyl azide), two polyolefin chains are advantageously joined.

The poly(sulfonyl azide) is any compound having at least two sulfonyl axidc groups (-SO₂N₃) reactive with the polyolefin. Preferably the poly(sulfonyl azide)s have a structure X-R-X wherein each X is SO₂N₃ and R represents an unsubstituted or inertly substituted hydrocarbyl, hydrocarbyl ether or silicon-containing group, preferably having sufficient carbon, oxygen or silicon, preferably carbon, atoms to separate the sulfonyl azide groups sufficiently to permit a facile reaction between the polyolefin and the sulfonyl azide, more preferably at least 1, more preferably at least 2, most preferably at least 3 carbon, oxygen or silicon, preferably carbon, atoms between functional groups. While there is no critical limit to the length of R, each R advantageously has at least one carbon or silicon atom between X's and preferably has less than 50, more preferably less than 20, most preferably less than 15 carbon, oxygen or silicon atoms. Silicon containing groups include silanes and siloxanes, preferably siloxanes. The term inertly substituted refers to substitution with atoms or groups which do not undesirably interfere with the desired reaction(s) or desired properties of the resulting coupled polymers. Such groups include fluorine, aliphatic or aromatic ether, siloxane as well as sulfonyl azide groups when more than two polyolefin chains are to be joined. R is suitably aryl, alkyl, aryl alkaryl, arylalkyl silane, siloxane or heterocyclic, groups and other groups which are inert and separate the sulfonyl azide groups as described. More preferably R includes at least one aryl group between the sulfonyl groups, most preferably at least two aryl groups (such as when R is 4,4' diphenylether or 4,4'-biphenyl). When R is one aryl group, it is preferred that the group have more than one ring, as in the case of naphthylene bis(sulfonyl azides). Poly(sulfonyl)azides include such compounds as 1, 5-pentane bis(sulfonylazide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-diphenyl ether bis(sulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from 2 to 5 sulfonyl azide groups per molecule, and mixtures thereof. Preferred poly(sulfonyl azide)s include oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl azidophenyl)methane, and mixtures thereof.

Sulfonyl azides are conveniently prepared by the reaction of sodium azide with the corresponding sulfonyl chloride, although oxidation of sulfonyl hydazines with various reagents (nitrous acid, dinitrogen tetroxide, nitrosonium tetrafluoroborate) has been used.

Sulfonyl azides decompose in several ways, but for the practice of the invention, the reactive species believed to be the singlet nitrene as evidenced by insertion into C-H bonds is desired. Photochemical decomposition of sulfonyl azides proceeds by radical intermediates, and in general does not provide an efficient preparative route to singlet materials and is, therefore, preferably avoided in the practice of the invention. However, the thermal chemistry is much more selective. Thermal decomposition is reported to give an intermediate singlet sulfonyl nitrene, which will react readily by insertion into carbon-hydrogen bonds. The high temperatures necessary for efficient formation of the sulfonyl nitrene is usually greater than 150°C. Sulfonyl azides are advantageous because the initially generated singlet nitrene does not undergo intersystem crossing to the triplet state nitrene as readily as do singlet nitrenes generated from formyl or aryl azides. Increased singlet stability translates into less selectivity on the part of sulfonyl nitrenes for primary as compared with secondary as compared with tertiary carbon-hydrogen bond insertion. There is some selectivity between alkyl and aromatic systems, however, with the latter being twice as reactive. Additionally, while aryl azides will not react with aromatic systems, formyl azides will, providing predominantly azepine products. Sulfonyl azides also form another intermediate believed to be a triplet nitrene under conditions such as temperatures in excess of 250°C. This intermediate leads to chain scission and is therefore, preferably avoided in the practice of this invention.

Those skilled in the art recognize that the reactivity, the poly(sulfonyl)azide and the desired or predetermined rheology or amount of chain coupling determine the amount of poly(sulfonyl)azide to be used. Determining this amount is within the skill in the art. In the practice of the invention, formation of crosslinked networks is to be avoided because the resulting material would be intractable; therefore, poly(sulfonyl azide) is preferably limited to that amount which results in chain coupled or rheology modified, (but not substantially crosslinked) polyolefin, preferably less than 0.5, more preferably less than 0.20 weight percent, most preferably less than 0.10) weight percent poly(sulfonyl azide) based on the total weight of polyolefin, preferably polypropylene or polypropylene/ethylene copolymer blend. Crosslinking is evidenced by gel formation which is measured in the case of polypropylene by xylene insolubility. In the practice of the invention, the resulting polymers preferably have less than 5 weight percent, more preferably less than 2 weight percent, most preferably less than 1 weight percent xylene insolubles as measured by ASTM D2765 (procedure A). The term "a rheology modifying amount" of poly(sulfonyl azide) is used herein the designate that amount of poly(sulfonyl azide) effective to rheology modifying the polymer it reacts with such that no more than 5 weight percent xylene insoluble gel is formed. At least 0.01 weight percent poly(sulfonyl azide) is advantageously used to achieve measurable results, preferably at least 0.02 weight percent and most preferably at least 0.05 weight percent poly(sulfonyl azide) based on total weight of polymer(s) is used. By decomposition temperature of the azide it is meant that temperature at which the azide converts to the sulfonyl nitrene, eliminating nitrogen and, more heat in the process. Specifically the peak decomposition temperature, as determined by differential scanning calorimetry (DSC). For instance, a differential scanning calorimeter (DSC) thermogram of the bis (sulfonyl azide) of diphenyl oxide shows a no change in the heat flow until a sharp endothermic melting peak is observed at 100 °C. The baseline is flat again (no heat flow) until a broad exothermic peak is observed that begins 150 °C, peaks at 185 °C (referred to herein as the peak decomposition temperature) and is complete by 2111 °C. The total amount of energy released due to decomposition of the sulfonyl azide groups is 1500 Joules/gram, The peak decomposition temperature is advantageously greater than 150 °C, preferably greater than 160 °C, more preferably greater than 180 °C. The polyolefin(s) and poly(sulfonyl azide) are suitably combined in any manner which results in desired reaction thereof, preferably by mixing the poly(sulfonyl azide) with the polymer(s) under conditions which allow sufficient mixing before reaction to avoid uneven amounts of localized reaction then subjecting the resulting admixture to heat sufficient for reaction. Preferably, a substantially uniform admixture of poly(sulfonyl azide) and polymer is formed before exposure to conditions in which chain coupling takes place. The term substantially uniform admixture means an admixture in which the distribution of poly(sulfonyl azide) in the polymer is sufficiently homogeneous to be evidenced by a polymer having a melt viscosity after treatment according to the practice of the invention higher at low angular frequency (for example 0. 1 rad/sec)-than that of the same polymer treated with the same amount of poly(sulfonyl azide) mixed with the polymer at a temperature where the polymer is solid rather than above its softening temperature or in other liquid form such as solution or dispersion in a liquid. Thus, preferably, in the practice of the invention, decomposition of the poly(sulfonyl azide) occurs after mixing sufficient to result in a substantially uniform admixture of poly(sulfonyl azide) and polymer. This mixing is preferably attained with the polymer in a molten or melted state, that is above the softening temperature, or in a dissolved or finely dispersed condition rather than in a solid mass or particulate form. The molten or melted form is more preferred because of the absence of solvent to be removed.

Those skilled in the art recognize that a polymer or mixture thereof melts over a range of temperatures rather than melting sharply at one temperature. For the practice of the invention it is sufficient that the polymer be in a partially melted state, recognized by the formation of a substantially uniform admixture as previously defined. For convenience, the temperature of this degree of melting can be approximated from the differential scanning calorimeter (DSC) curve of the polymer or mixture thereof to be treated. The temperature necessary for forming a substantially uniform admixture is facilitated by comparing a DSC curve of melt flow vs. temperature of a polymer with the poly(sulfonylazide) of interest to find the reaction profile of the poly(sulfonyl azide) and a DSC curve of the polymer in which the poly(sulfonyl azide) is to be used. For instance, the reaction temperature profile of oxybis(4-sulfonylazidobenzene) shows an onset of reaction above 150°C with a peak decomposition temperature 186°C. Thus, polymers can be mixed into a substantially uniform admixture with the poly(sulfonyl azide) at temperatures between the softening temperature (as indicated by the onset of softening in the DSC curve) and melt temperature (where melting is complete) before reaching the decomposition temperature of the poly(sulfonyl azide). Conveniently the formation of a substantially uniform admixture occurs along a temperature profile in a equipment such as an extruder.

Any equipment is suitably used, preferably equipment which provides sufficient mixing and temperature control in the same equipment, but advantageously practice of the invention takes place in such devices as an extruder, melt mixer, pump conveyor or other or a polymer mixing devise such as a Brabender melt mixer. The term extruder is used for its broadest meaning to include such devices as a device which extrudes pellets or pelletizer. Preferably the equipment allows a sequence of temperatures or zones having different temperatures. The reaction is especially suitable for an extruder because practice of the invention can occur in a single vessel (that is any single piece of equipment capable of containing polymer), preferably by having sufficient mixing occur at a softening temperature of the polymer, more preferably before there is sufficient heat to raise the mass of the polymer to the peak decomposition temperature of the poly(sulfonyl azide). Conveniently, when there is a melt extrusion step between production of the polymer and its use, at least one step of the process of the invention takes place in the melt extrusion step. While it is within the scope of the invention that the reaction take place in a solvent or other medium, it is preferred that the reaction be in a bulk phase to avoid later steps for removal of the solvent or other medium. For this purpose, a polymer above the softening temperature is advantageous for even mixing and for reaching a reaction temperature (the decomposition temperature of the sulfonyl azide).

The process of the present invention takes place in a single vessel, that is mixing of the poly(sulfonyl azide) and polymer takes place in the same vessel as heating to the decomposition temperature of the poly(sulfonyl azide). The vessel is most preferably a twin-screw extruder, but preferably a single-screw extruder or advantageously a melt mixer, including a batch mixer. The reaction vessel more preferably has at least two zones of different temperatures into which a reaction mixture would pass, the first zone advantageously being at a temperature at least the softening temperature of the polymer(s) and preferably less than the decomposition temperature of the poly(sulfonyl azide)s and the second zone being at a temperature sufficient for decomposition of the poly(sulfonyl azide). The first zone is preferably at a temperature sufficiently high to soften the polymer and allow it to combine with the poly(sulfonyl azide) through distributive mixing to a substantially uniform admixture. Especially in the case of propylene polymers, most preferably the polyolefin(s) and poly(sulfonyl azide) are exposed to a profile of temperatures ranging from 160°C to 220°C.

The term "profile" is used herein to mean a series of temperatures to which the polymer is exposed, each temperature being at least 5 °C, preferably at least 10 °C higher than the preceding temperature. The series preferably comprises at least one temperature at least the softening temperature of the polymer(s) and at least one at least the decomposition temperature of the poly(sulfonyl azide), more preferably the profile comprises at least 3, most preferably at least 4 such temperatures, wherein in addition to at least one temperature at least the softening temperature and at least the decomposition temperature, the polymer is exposed optionally to temperatures between those temperatures, and optionally at least one temperature above the decomposition temperature of the poly(sulfonyl azide), more preferably including at least one temperature at least 5, most preferably at least 10, even more preferably at least 15°C above the decomposition temperature. In the description of this invention, when temperatures are described in terms of the softening or decomposition temperatures, the temperatures are the stream temperatures, that is temperatures inside the polymer stream or polymer melt rather than the temperatures of the equipment which are understood by those skilled in the art to be likely to be lower or higher than stream temperatures because of imperfect heat transfer into the polymer or induced shear heating of the polymer. Those skilled in the art can determine the relationship between stream temperature and equipment or gage temperature of particular equipment without undue experimentation. It is known in the art that the polymer melt (stream) temperature is advantageously close to the machine set temperature in the initial zones of an extruder, but the polymer melt (stream) temperature can often be greater than the machine set temperatures in the latter zones of the extruder as it approaches the exit die of the extruder due to mechanically induced shear heating.

Processing temperatures and polymer melt temperatures in excess of 250 °C, however, can lead to molecular weight degradation of the product rather than chain coupling. Representative data shows that at 200 °C, isotactic polypropylene melt viscosity rises sharply due to reactive chain coupling via the poly(sulfonyl)azide compound, and then levels off or drops slightly due to shear heating. In contrast, when the reaction is run at a higher temperature (∼250°C), no sharp rise in melt viscosity due to chain coupling is observed and the viscosity actually decreases as a function of time, indicating a decrease in molecular weight, believed to be due to chain scission reactions taking place. Thus, in the practice of the invention, temperatures of 250 °C or greater are preferably avoided while there is sufficient unreacted poly(sulfonyl azide) in the reaction mixture to result in more than 1 weight percent of polymer having a molecular weight below that of the starting material as measured by polymer weight average molecular weight via gel permeation chromatography.

Similarly, chain scission is observed when free radicals are present from other sources such as from peroxides; therefore, unless chain scission is desired, sources of free radicals are preferably avoided in the practice of the invention.

The temperature is maintained at least the decomposition temperature for a time sufficient to result in decomposition of at least sufficient poly(sulfonyl azide) to avoid later undesirable reaction, preferably at least 80 more preferably at least 90, most preferably at least 95 weight percent of the poly(sulfonyl azide) is reacted. Those skilled in the an realize that this time is dependent on whether the temperature is one at which the azide stowly decomposes or one at which it very rapidly decomposes. For convenience, the temperatures are selected such that the times are preferably less than 5 minutes, more preferably less than 2 minutes. However it is also preferable that the times be at least 1 minute, more preferably at least 2 minutes to avoid unreacted poly(sulfonyl azide) and subsequent undesirable reactions or to avoid the need for inconveniently, possible destructively high temperatures. In the case of preferred poly(sulfonyl azides) having at least 2 sulfonyl azide groups on separate aromatic rings which rings are not conjugated such as 4,4' -diphenyl ether bis(sulfonyl azide) a final temperature of at least 230°C is preferably used for a period of at least 2 minutes. At temperatures closer to 200°C. preferred times are at least 4, more preferably at least 5 minutes. Preferred reaction times (tᵣ) in minutes for reactions between and corresponding to 4 minutes at a reaction temperature (T_{R}) of 200°C and 2 minutes at a reaction temperature of 230°C can be linearly approximated by the equation: tᵣ = 4 - (TR - 200 )*0.1.

While it is particularly useful to practice the present invention within an extruder or a pelletizer (the latter preferably as a step in the production of the polymer), conventional extruder screws are less than optimal for practice of the invention. Typically high shear mixing elements are nearer the exit terminus of the extruder die. In the practice of the invention, in an extruder having a die through which polymer is transported by at least one screw, an input means for polymer (for instance a feed port) an exit where the extruded polymer leaves the die: it is preferred to have high shear mixing elements earlier in the extruder, more preferably more high shear mixing elements between the input means and the midpoint than between the midpoint and the exit. where the midpoint is the midpoint between the input means and the exit. An extruder screw for use in a preferred embodiment of this invention, has a nominal length-to-diameter ratio (L/D) of at least 28, preferably at least 30, more preferably 40, most preferably less than 48 for the purpose of achieving a sufficient residence time for mixing and reaction of poly(sulfonyl azide) with polymer, especially a propylene polymer. Further, the screw design includes multiple mixing zones, at least 2, each of which zones advantageously includes at least one type of mixing element within the skill in the art (preferably selected from AMT-type (that is Advanced Mixing Technology), kneading block-type, gear mixer-type, modified conveying-type). One preferred embodiment includes AMT-type screws having variations in the height or presence of sections of the flights on corotating, intermeshing twin screws or changing or different numbers of flights on element pairs having the same axial position on different shafts of such screws, for instance as disclosed in PCT application 97/17007, published as WO 98/13189 and U.S. copending Application Serial Number 08/935626 filed September 23, 1997 and copending Application Serial Number 08/974185 filed November 19, 1997. The AMT technology allows thorough mixing without sufficient increases in temperature from the mixing process itself to result in premature reaction with the poly(sulfonyl azide) before a substantially uniform admixture is attained. For practice of the invention, each screw preferably also has a solids conveying zone followed by at least one kneading block section in which melting occurs followed by at least two, more preferably at most 8, mixing zones. Each mixing zone is separated from the adjacent mixing zone by a change in type of mixing element or a conveying zone following a mixing zone. Optionally, each mixing zone independently includes at least one conveying element to pump polymer to the mixing elements, from the mixing elements or both to and from the elements. Managing residence time is within the skill in the art by selecting the extruder length (L/D) and positioning the melting zone sufficiently far from the tenninus of the extruder (discharge orifice) to give time required for reaction in the melt. The temperature within the melted polymer (melt temperature) is strongly affected by the length of the reaction zone, as heat is generated by viscous dissipation in the melt conveying regions. Temperature management and distributive mixing is advantageously accomplished by using alternating zones of mixing elements.

The result of the process of the invention is a coupling of one polymer chain to another via sulfonamide linkages, preferably -NSO₂RSO₂N- when the poly(sulfonyl azide) is XRX. When polymer chains are thus coupled or linked, they are referred to herein as chain coupled polymers and as rheology modified polymers. Advantageously, chain coupled polymers behave rheologically, similar to branched polymers of corresponding composition which have branches of at least 20 carbon atoms. For instance, the solution viscosity (or intrinsic viscosity) increases with molecular weight and the melt flow rate increases. Thus, in the practice of the invention, linear polymers are converted to polymers having non-linear chains. The resulting polymer is obtained as a solid thermoplastic polymer, advantageously having a low shear melt viscosity at least as great as that of the starting material and a melt strength greater than that of the starting material. Advantageously the resulting polymer has a weight average molecular weight greater than that of the linear polyolefin starting material (before inter-chain coupling), preferably at least 5 percent greater, more preferably at least 10 percent greater, most preferably at least 20 percent greater. The resulting polymer advantageously has chain coupling of long polymer chains, that is chains of at least 20 carbon atoms, as evidenced by the rheology changes. In the embodiment of the invention wherein the polymer starting material(s) have tacticity, coupling of long polymer chains is preferably of chains having the same stereoisometric structure as the backbone, that is, isotactic polypropylene (i-PP) chains to isotactic polypropylene, syndiotactic chains to syndiotactic polymers and atactic chains to atactic polymers for the purposes of maintaining desired properties associated with each stereoisometric structure. However, in the case where this invention is practiced on blends of two or more polyolefin polymers of differing tacticity, the coupling of polymer chains of different tacticity may be desirable from an end-use standpoint (for example to obtain broadened melting point range, toughness, etc.)

Furthermore, the resulting chain coupled polymers are advantageously observed to have enhanced strain hardening as demonstrated by tensile stress growth coefficient.

The resulting polymer is used alone or is admixed with other polymers, advantageously similar polymers, preferably polypropylene polymers, having differing amounts, preferably less or no coupled polymer chains. The polymers resulting from practice of the present invention and compositions including them preferably have improved melt strength and are, therefore, very desirable for molding operations where higher melt strength is advantageous such as injection blow molding, high-speed extrusion coating, thermoforming, profile extrusion and multilayer co-extrusion all of which are within the skill in the art. Similarly, polymers resulting from practice of the invention are particularly suited to formation of films and foams because of their viscosity and shear viscosity properties. In the practice of this invention to form chain coupled propylene polymers or other polyolefins, it is advantageous to use a lower molecular weight isotactic polypropylene as a starting material (in contrast to the teachings of US 3,336,268 where use of polypropylene having a molecular weight of at least 275,000 is claimed) for two distinct reasons. First, if the poly(sulfonyl)azide reacts at one end with a lower molecular weight isotactic polypropylene molecule, the probability of reaction of the second sulfonyl azide group on the poly(sulfonyl azide) with a different isotactic polypropylene molecule is statistically greater. The use of high molecular weight isotactic polypropylene increases the probability of formation of cyclic structures resulting from reaction of the poly(sulfonyl)azide at different locations along the chain of the same polypropylene molecule (intrachain coupled). Such cyclic structures do not impart enhanced melt viscosities at low shear rates as do long chain branched polymers and interchain coupled polymers. Secondly, use of a lower molecular weight isotactic polypropylene allows for greater control over the degree of chain coupling so that a greater range of melt flow rate materials can be obtained that are still processable. Often, very low MFR's (<3 g/10 min at 230 °C) are undesirable because such materials are difficult to process and fabricate, using the most widely available equipment. Thus, polypropylenes to be chain coupled by the process of the invention preferably have a molecular weight of less than 275,000, more preferably less than 250,000, most preferably less than 225,000. Preferably the polypropylenes have a molecular weight of at least 100,000, more preferably at least 150,000. most preferably at least 180,000. These molecular weights are weight average molecular weights as measured by gel permeation chromatography.

Another embodiment of the invention is the use of the process of the invention on blends to improve physical properties such as impact strength, stiffness, heat resistance, scratch and mar resistance, processability, of these blends as compared to blends of the same components not treated by the process of the invention. The blends are admixtures of at least two polymers, at least one of which is preferably a polyolefin polymer (A), most preferably a propylene polymer, as previously defined. The other polymer (B) is preferably a polyolefin such as a propylene/alpha-olefin copolymer, polyethylene, ethylene/alpha-olefin copolymer, or mixtures thereof. The alpha-olefin monomer is a C₂ to C₁₂ alpha-olefin capable of co-polymerizing with either ethylene or propylene: Examples include 1-butene, 1-pentene, 1-hexene, 1-octene, and the like. C₂ to C₁₂ olefins are preferred. C₂ to C₁₀ olefins are more preferred, and C₂ to C₈ olefins are most preferred. Polymer A preferably contains propylene and optionally 0 to 20 weight percent alpha-olefin other than propylene, more preferably 0 to 10 weight percent other alpha-olefin, and most preferably 0 5 weight percent other alpha-olefin. Polymer B preferably contains ethylene and optionally 0 to 60 weight percent alpha-olefin other than ethylene, more preferably from 20 to 60 weight percent other alpha-olefin, and most preferably from 40 to 60 weight percent other alpha-olefin.

Treatment of such blends with the poly(sulfonyl azide) according to practice of the invention as described for polypropylene previously results in blends of the invention which blends are preferably TPE's when a polyolefin is the continuous phase and for example polypropylene is the dispersed phase or TPO's when for example polypropylene is the continuous phase. These blends of the invention are referred to herein as chain coupled, reactively coupled or coupled blends. A blend is advantageously mixed with a poly(sulfonyl azide) above the softening temperature of at least one component of the blend, most preferably below the decomposition temperature of the poly(sulfonyl azide), and the resulting mixture is preferably raised to at least the decomposition temperature of the poly(sulfonyl azide) as in the case of treatment of a propylene polymer with the poly(sulfonyl azide). As in the case of a single polymer, application of the practice of the invention to blends advantageously involves forming a substantially uniform admixture of polymers and poly(sulfonyl azide) before decomposition of the poly(sulfonyl azide), although in the case of blends where there are dispersed and continuous phases, it is sufficient that the poly(sulfonyl azide) be dispersed at the interface of the phases rather than uniformly distributed in particularly the dispersed phase unless chain coupling of the dispersed phase itself is desired. Most preferably, the poly(sulfonyl azide) and resulting coupling is distributed primarily at the interface of the different polymers. Distribution primarily at the interface is advantageously achieved by adding the polyazide after the two immiscible polymers have been mixed to the extent that a minimum dispersed polymer particle size has been achieved. This allows for the maximum amount of interfacial surface area to be available for reaction of the polyazide.

Where there are dispersed and continuous phases , it is most preferable, but not necessary, to add the poly(sulfonyl azide) after the blend of two or more polymers is well mixed, that is at a point when the particle size of the dispersed polymer has reached the smallest size practically attainable on the particular mixing devise being used. At least one of the blend polymer components is preferably at least at its softening temperature. More preferably mixing occurs or is continued when the blend is at a temperature sufficient for the poly{sulfonyl azide) to react to form a reactive species believed to be a singlet nitrene capable of inserting into carbon-hydrogen bonds, that is at its decomposition temperature This allows for optimum reaction at the interface between the two polymers. White it is preferred that mixing of the blend and poly(sulfonyl azide) precede a temperature increase to the decomposition temperature, alternatively, mixing occurs at or above the decomposition temperature of the poly(sulfonyl azide).

It is believed that the improved impact strength exhibited by TPO's of the invention results from the formation of polymers coupled between components of the blend, for example TPO or TPE. for example isotactic polypropylene-coupled-ethylene/octene materials, *in-situ* from reaction of a polypropylene molecule and a polyolefin with a poly(sulfonyl azide). This coupled polymer would then act as a compatibilizer for the immiscible isotactic polypropylene and ethylene/octene elastomer, and lower the interfacial tension between the blend components. The result is believed to be a finer dispersion of ethylene/octene in isotactic polypropylene, or a coupling of dispersed particles to the continuous phase polymer leading to improved impact properties.

The amount of poly(sulfonyl azide) used to treat blends by the practice of the invention is an amount sufficient to result in improved impact strength of the blend, especially FPO's), especially for TPE's increased modules at temperatures where comparable blends began to show reduced modulus, preferably above 60°C, more preferably above 70°C, most preferably above 80°C, or to reduce the average particle size of the dispersed phase as observed by electron microscopy as compared with a blend of the same components formed with the same mixing and some other conditions but without reaction with the poly(sulfonyl azide). Impact strength and modulus is measured by any means within the skill in the art for instance Izod impact energy ASTM D 256, MTS Peak Impact Energy (dart Impact) ASTM D 3763-93, MTS total Impact Energy ASTM D-3763, or flex Modulus ASTM D790. This amount is preferably at least 0.01and preferably less than 0.5 more preferably less than 0.3. most preferably less than 0.2 weight percent of poly(sulfonyl azide) based on total weight of polymers in the blend.

A blend of the invention in which a polyolefin, for example ethylene-octene elastomer, is continuous with a dispersed isotactic polypropylene phase is generally categorized as a thermoplastic elastomer (TPE). The rigid phase (isotactic polypropylene) reinforces the elastomer, which permits its use in higher temperature applications. One approach to preparing TPE's based on polyolefins is to blend high density polyethylene or isotactic polypropylene into elastomeric materials. However, without some degree of interfacial bonding (coupling), the properties of these materials are inferior as measured by modulus versus temperature behavior obtained using dynamic mechanical spectroscopy. Peroxides can be used to accomplish interfacial bonding in polyethylene-based systems, but peroxides are disadvantageous with such polymers as isotactic polypropylene, because chain scission reactions occur. However, through the use of the poly(sulfonyl azide) coupling chemistry, true thermoplastic elastomers can be prepared that demonstrate superior temperature performance compared to control systems.

As described previously for TPO's, the formation of coupled polymers, for example ethylene/octene- coupled-isotactic polypropylene moieties, *in-situ* is believed to lead to lower interfacial tension between the blend components, resulting in a much finer dispersion of for example isotactic polypropylene in the ethylene/octene elastomer or coupling of dispersed phase to continuous phase. In addition, these coupled species are believed to tend to localize at the interface between the elastomer and isotactic polypropylene, giving rise to better stress transfer between phases.

Using the enhanced dispersion of one polymer phase in another or a combination thereof strengthened interface between phases, one can advantageously obtain equivalent impact, particularly low temperature impact with less dispersed phase, with increased modulus, heat stability, processability or a combination thereof lower cost. Scratch and mar resistance are preferably also improved. Advantageously, one can obtain better impact properties, for example including Izod impact, compared with a polymer blend (for example TPO) with the same amount and type of dispersed phase but not coupled with poly(sulfonyl azide). Alternatively, one can use less impact modifier (elastomer to get equivalent impact performance with the practice of the invention than with the same components without poly(sulfonyl azide) coupling. Alternatively, one can more efficiently impact modify high-flow polypropylenes (for example MFR greater than or equal to 35 g/10 min) for lower gauge (lower thickness) articles such as bumper facia for automotive applications as well as other molded durable goods. A first impact modifier is considered more efficient than a second impact modifier when either less of the first impact modifier than the second is required to get equivalent impact performance or when used in the same amounts, use of the first impact modifier results in more impact resistance than use of the second.

Alternatively, practice of the invention permits TPE's to have isolactic polypropylene as the dispersed phase to obtain a TPE with greater stiffness (modulus) at higher temperatures than a corresponding TPE with high density polyethylene (HDPE) as the dispersed phase.

Advantageously, a TPO prepared by a process of the invention also has low temperature ductility as measured by instrumented dart impact or notched lzod impact testing improved over that of a TPO of the same components but not treated with poly(sulfonyl azide) according to the practice of the invention.

TPO's and impact modified polypropylenes coupled according to the practice of the invention are particularly useful as large parts such as pickup truck bed liners, tubs, and refrigerator parts such as door liners because of the reduced sag which facilitates thermoforming. Improved chemical resistance for example to blowing agents from insulation also enhances use as a refrigerator parts and containers. Rheology-modified resins, arising from the chain-coupling reactions described in this invention, exhibit more resistance to flow in flows dominated by extension (extensional flows). The resistance, for example, sometimes rises 100 fold after chain coupling as indicated by a 100-fold rise in the tensile stress growth coefficient ηE+. These resins are considered high-melt-strength resins by those skilled in the art due to their elevated values of ηE+ [See, for example. Montell patents US 5,554,668; European Patent 0190889]. Higher melt strength in extensional flows relative to linear chains with the same absolute weight-average molecular weight Mw and for the same temperature is useful, for example, in extrusion coating, film production and thermoforming.

In contrast, in flows dominated by shear, rheology-modified resins exhibit more resistance to flow at low shear rates and little resistance to flow at high shear rates relative to linear chains with the same absolute weight-average molecular weight Mw and for the same temperature. The resistance, for example, sometimes rises 100 fold after chain coupling as indicated by a 100-fold rise in the magnitude |η*| ( of dynamic shear viscosity coefficient at low angular frequency (0.01 rad/s), but may fall dramatically to those of uncoupled chains at high angular frequency (100 rad/s). Similarly, the dependence on the resistance to flow on shear rate will follow that of angular frequency based on the Cox-Merz rule [W. P. Cox and E. H. Merz, J. Polym. Sci. 28:619. 1958]. Easy melt flow at high shear rates relative to linear chains with the same absolute weight-average molecular weight Mw and for the same temperature is useful, for instance, for acceterated fabrication involving extrusion, injection molding, blowing film and the like.

Advantageously, polymers coupled according to the practice of the invention also exhibit wider temperature range for thermoforming relative to the starting material without poly(sulfonyl azide), higher crystallizalion temperature Tc when cooling from the melt which is useful for controlling clarity in film applications rotative to the starting material without poly(sulfonyl azide), or a combination thereof.

Consequently, rheology-modified resins of the invention advantageously have the high melt viscosities in shear and extensional flows required for applications involving creeping filows, which for example are key to reduce sag in thermoforming, whereas their viscosities fall dramatically to those of non-modified resins for the easy flow required at high shear rates for fast production of film. Both features are typically observed when long-chain branches or similar structures are introduced into a polymer.

Melt strength is measured in uniaxial conditions extensional flow at isothermal conditions. Linear chains of isotactic polypropylene do not strain harden for all Mw reported in literature. In contrast, chain-coupled isotactic polypropylene chains strain harden strongly as indicated by a rise in the viscosity η_{E}⁺ by a factor of 10-100.

Strain hardening in uniaxial extensional How is a metric used in the art such as Montell patents (US 5,554,668: Europe 0190889) disclosing in high-melt-strength for polymers obtained in alternative route(s) to non-linear polypropylene. Characterization of one high-melt-strength resin commercially available from Montell Polyolefins. Inc. under the trade designation Profax PF 814, shows a dependency of tensile stress growth coefficient η_{E}⁺ on time and strain rate ε̇ at 175°C. Strain hardening, indicated by η_{E}⁺ > 3|η*|, is observed for *t* > 1 sec at all strain rates illustrated. Similar levels (1-2 orders of magnitude) of strain hardening are produced with resins chain-coupled according to the practice of the invention. Only failure by fracture was observed in both instances.

The tensile stress growth coefficient ^{η}E⁺ is a measure of the resistance of a fluid or semifluid to uniaxial extensional flow, and is computed from measurements of stress and strain of a thermoplastic melt when subjected to tensile strain at a constant rate and temperature for instance by the procedure is described by J. Meissner in Proc. XIIth International Congress on Rheology. Quebec. Canada. August 1996, pages 7-10 and by J. Meissner and J. Hostettler. Rheol. Acta, 33, 1-21 (1994). A commercial instrument for the measurements is the Elongational *Rheometer for Melts* (RME) commercially available from Rheometric Scientific.

Dynamic shear viscosity coefficient η* is a measure of the resistance of a fluid or semifluid to shear flow, and is computed from measurements of stress and shear rate of a thermoplastic melt when subjected to small-amplitude oscillatory shear at a constant strain amplitude and temperature, for instance using a parallel-plate geometry in a Dynamic Mechanical Spectrometer II commercially available from Rheometric Scientific. Shear viscosity measurements are within the skill in the art for instance as described by R. Hingmann and B. L. Marczinke, J. Rheol. 38(3), 573-87, 1994.

The dependence of the magnitude |η*| of the dynamic shear viscosity on angular frequency w is often used to measure the dependence of the steady-state shear viscosity η(γ̇) an shear rate γ̇. The relationship is known in the art as the Cox-Merz rule (W. P. Cox and E. H. Merz, J. Polym. Sci. 28:619, 1958), and is applicable to many types of flexible polymer chains, as taught by J. M. Dealy and K. F. Wissbrun in *Melt Rheology and its Role in Plastics Processing,* Chapman & Hall, NY, *1995.* pages 173-5.

When dependency of |η*| on w for a set of isotactic polypropylene materials before and after chain coupling by the practice of the invention to selected levels are measured, viscosities |η*| observed at low w, advantageously are elevated by a factor of 100, after chain coupling. In contrast, viscosities |η*| observed at high w are relative metrics of η(γ̇) at high γ̇ and are weakly sensitive to chain coupling. Consequently, chain-coupled materials have the higher melt viscosities required for applications involving creeping flows, to reduce sag in thermoforming for example, whereas their viscosities fall dramatically to those of non-coupled materials for easy flow required at high shear rates to make film. The decrease in the melt viscosity with higher shear rate is termed shear thinning. Chain-coupled materials shear thin more strongly than non-coupled materials.

Thermoforming of many semicrystalline materials, such as isotactic polypropylene, is commonly performed at temperatures between the softening and melting points called a thermoforming window. In this temperature range, tensile moduli of solid bars fall steeply when warmed, and shear viscosity of molten disks rise rapidly when cooled. This phenomenon is known in the art for instance as discussed by J. L. Throne, *Technology of Thermoforming* Chapters 2 and 4, Hanser, N.Y., 1996 which include examples of several materials. The thermoforming window may be only a few degrees Celsius for a sample of isotactic polypropylene without chain coupling. In contrast, chain-coupled materials have wider windows (for instance 4 to 15 °C), and the window breadth varies with the level of chain coupling. The higher melt viscosities and strengths of chain-coupled isotactic polypropylene enable extension of the processing window to melt temperatures.

Chain-coupled isotactic polypropylene materials crystallize at higher temperatures (Te) when cooling from the melt than do their uncoupled (linear) starting materials. A steep rise in the shear viscosity while cooling fingerprints resin crystallization. Chain coupling, increases T_{c} as much as 25 °C.

Propylene polymers coupled according to the practice of the invention are particularly useful to make large articles because of the reduced sag on heating as compared with polymer of the same composition which has not been coupled. Such large parts include appliance parts including refrigerator lining parts (for example door liners), automobile parts such as pickup bed liners, and containers such as tubes.

The following examples are to illustrate this invention and do not limit it. Ratios, parts, and percentages are by weight unless otherwise stated. Examples (Ex) of the invention are designated numerically while comparative samples (C.S.) are designated alphabetically and are not examples of the invention.

In these examples and as otherwise referred to herein, gel permeation chromatography (GPC) was conducted according to the following procedure:
The analysis was carried out on a Waters 150°C high temperature instrument.
Sample Prep: 15 ± 1.0 mg of the sample was dissolved in 13.0 ml of TCB (trichlorobenzene) containing 300 ppm w/w (weight/weight) 2,6-di(tertiary-butyl)4-methylphenol commercially available from Shell Chemical Company under the trade designation lonol. The solutions were shaken at 160 °C for 2 hours. The hot solutions were filtered using a 0.5 micron stainless steel filter.
Pump: Flow rate of 1.1 ml/min, nominal, at a temperature of 60 °C.
Eluent: Fisher HPLC grade 1,2,4-trichlorobenzene with 200 ppm w/w lonol.
Injector: Inject 150 microliters, at a temperature of 135 °C.
Columns: 3 columns commercially available from Polymer Laboratories under the trade designations 10 micrometer Mixed B, SN 10M-Mixed B-87-130. 87-132, and 103-37 heated to 135 °C.
Detection: Refractive Index Detector with a sensitivity of 32 and a scale factor of 10.
Data system: commercially available from Polymer Laboratories under the trade designation Caliber GPC/SEC, version 6.0.
Calibration: A polystyrene/polypropylene universal calibration was carried out using narrow molecular weight distribution polystyrene standards from Polymer Laboratories with lonol as the flow marker.

| | | |
|---|---|---|
| PS | k = 12.6e-5 | a = 0.702 |
| Polypropylene | k = 14.2e-5 | a = 0.746 |

The bis(sulfonyl azide)s were prepared by the reaction of sodium azide with the corresponding bis(sulfonyl chloride)s and all of the bis(sulfonyl chloride)s were commercially, available. Two sets of conditions were used for preparing the sulfonyl azides. In the first, an aqueous solution of sodium azide was added to an acetone solution of the bis(sulfonyl chloride), and the product was isolated by precipitation with excess water. This protocol was used for all the azides except oxy-bis((4-sulfonyl azide)benzene) and 1,3-bis(sulfonyl azide)benzene which did not precipitate well from aqueous acetone. For these compounds, solid sodium azide was added to the acetone solution of the corresponding bis(sulfonyl chloride).

### Example 1: Preparation of Long chain coupled isotactic polypropylene

A 1000g sample of isotactic polypropylene pellets (commercially available from Montell NA under the trade designation Montell Profax 6231, melt flow rate (MFR) =20) were uniformly coated with 1g of silicon oil by adding the silicon oil to the pellets and then tumbling the mixture for one hour. To this mixture was added 1g of solid powder oxy-bis([4-sulfonylazido|benzene) (BSA) and 0.5 g of Irganox B-225 thermal stabilizer (Ciba-Geigy) followed by tumbling for an additional hour to uniformly coat the polypropylene pellets with the solid powder. The pellets were fed into a 20mm Welding Engineers twin-screw extruder running at 200 rpm with the following temperature profile:

| Zone | set temperature °C | temperature in the melt Stream °C |
|---|---|---|
| Zone 1 (feed) | 170°C | below melt temperature of polymer |
| Zone 2 | 180°C | |
| Zone 3 | 190°C | |
| Zone 4 | 200°C | |
| Zone 5 | 210°C | |
| Zone 6 | 210°C | 205°C |
| Zone 7 | 210°C | |
| Die | 200°C | |

The product isotactic polypropylene that exits the die of the extruder was cooled in a water bath and granulated in a chopper. The product was the characterized using dynamic mechanical spectroscopy (DMS), differential scanning calorimetry (DSC), and gel permeation chromatography (GPC), all according to manufacturers' directions.

| | |
|---|---|
| Starting PP Properties | Coupled PP Properties |
| Mw = 234,500 g/mole | Mw = 304,700 g/mole |
| Mw/Mn = 7.9 | Mw/Mn = 10.8 |
| Tm = 170 °C | Tm = 170°C |
| Tc = 110°C | Tc = 128 °C |
| η* at 0.10 rad/sec = 17,679 Poise | η* at 0. 10 rad/sec = 46,025 Poise = 4603 Pa/s |
| η* at 100 rad/scc = 2476 Poise | η* at 100 rad/sec = 1827 Poise = 18.3 Pa/s |

The profiting of the temperature of this invention allowed the bis-sulfonyl azide (BSA) compound (m.p. = 101°C) to intimately mix with the softened isotactic polypropylene in zones 1 and 2 of the extruder. Although the set temperature was 170°C in the first zone, the polymer temperature was observed to be less than the melt temperature of the polymer. Melting was observed in the second zone. The liquid bis-sulfonyl azide compound was thus well dispersed in the isotactic polypropylene as the melt temperature reaches that required to generate a significant concentration of active nitrene species (-170°C). This gave rise to a more homogeneous reaction with isotactic polypropylene than would mixing at or above the decomposition temperature of the sulfonyl azide which would result in localized regions in the isotactic polypropylene melt that contain a high concentration of BSA that can lead to gel formation.

### Examples 2, 3, and 4: Demonstration of Long Chain Coupling.

The procedure of Example 1 was repeated for Examples 2, 3 and 4 except that the amounts of BSA were 0.250 weight percent, 0.060 weight percent, and 0.125 weight percent for Examples 2, 3, and 4, respectively.

Direct evidence that the products of reaction between isotactic polypropylene and a bis-sulfonyl azide were chain coupled was derived from characterization of the materials by GPC using an intrinsic viscosity detector according to manufacture's instructions. A branched polymer typically exhibits a lower intrinsic viscosity than a linear analog of the same molecular weight. Deviation from a linear response of viscosity vs. Mw is typically observed for branched polymers. Thus, chain coupling according to the practice of the invention results in polymer chain structures which act similar to branched polymers even thought the molecular structures are believed to be somewhat different. A visual comparison of plots of solution (intrinsic) viscosity vs. MW for Examples 2, 3, and 4 derived from reaction of increasing amounts of BSA with MFR 20 isotactic polypropylene as compared to the linear isotactic polypropylene starting material shows a negative deviation from linearity with increasing Mw was a clear indication of the presence of chain coupling within these samples. From the raw data for a plot of the log of Mw v. log of intrinsic viscosity, sorted by log Mw, negative deviation from linearity was evident.

**TABLE Ex. 1**

| Example Number | Log Mw (sorted) | Log intrinsic viscosity |
|---|---|---|
| Example 2 | 5.376896 | 0.027795 |
| Example 3 | 5.386618 | 0.099025 |
| Example 4 | 5.409192 | 0.106722 |
| Linear Control iPP | 5.435436 | 0.148834 |
| Example 2 | 5.551637 | 0.135784 |
| Example 3 | 5.559146 | 0.207035 |
| Example 4 | 5.580848 | 0.214888 |
| Linear Control iPP | 5.607592 | 0.254997 |
| Example 3 | 5.729059 | 0.312677 |
| Example 2 | 5.731839 | 0.232064 |
| Example 4 | 5.752042 | 0.319076 |
| Linear Control iPP | 5.77522 | 0.362507 |
| Example 2 | 5.904068 | 0.335558 |
| Example 3 | 5.90526 | 0.413612 |
| Example 4 | 5.931467 | 0.417545 |
| Linear Control iPP | 5.938725 | 0.478982 |
| Example 3 | 6.078963 | 0.52939 |
| Example 2 | 6.082482 | 0.44176 |
| Example 4 | 6.104527 | 0.535995 |
| Linear Control iPP | 6.117916 | 0.596873 |
| Example 3 | 6.280275 | 0.64532 |
| Example 2 | 6.284844 | 0.546935 |
| Example 4 | 6.310505 | 0.641561 |
| Linear Control iPP | 6.326913 | 0.720765 |
| Example 3 | 6.454756 | 0.750733 |
| Linear Control iPP | 6.459795 | 0.826464 |
| Example 4 | 6.546106 | 0.769116 |
| Example 2 | 6.565885 | 0.676424 |
| Example 3 | 6.605966 | 0.870552 |
| Linear Control iPP | 6.630253 | 0.94086 |
| Example 2 | 6.648839 | 0.759547 |
| Example 4 | 6.661234 | 0.844605 |
| Example 3 | 6.776435 | 0.979857 |
| Linear Control iPP | 6.797305 | 1.052972 |
| Example 2 | 6.826609 | 0.86363 |
| Example 4 | 6.836135 | 0.952197 |

In Table Ex 1, iPP stands for isotactic polypropylene. Plotting of data such as that in Table Ex 1 and other tables herein is within the skill in the art and is illustrated in copending U.S. Application serial number 60/057713, filed August 27, 1997.

### Comparative Samples A and B and Figure 1:

To illustrate the effect of mixing at a decomposition temperature, an experiment was run in a static mixing device (commercially available Haake mixer) at a fixed temperature (210°C) using the same starting materials at the same concentrations as in Example 1. The change in the rheological properties as measured by dynamic mechanical spectroscopy at 200 °C of the resulting chain coupled isotactic polypropylene arc shown in Figure 1. The degree of rheological change is greater for the material produced using the extruder and a temperature profile (Example 1, designated J) vs. the batch mixer operating at a fixed temperature (C.S. A designated H) corresponding to prior art methods. The starting material polypropylene is included in Figure 1 for comparison (C.S. B) and is labeled B. In Example 1, the poly(sulfonyl azide) was mixed with the starting polymer in the softened or melt phase. It was evident that the practice of the invention results in a material having higher viscosity at low shear and lower viscosity at high shear than either of the Comparative Samples.

### Examples 5-12 and Comparative Samples C-E: illustrating the Advantages of Lower Molecular Weight Starting Polymer

The procedure of Example 1 was repeated except that the types and amounts of starting materials were as shown in Table Ex. 5:

| Example/ Sample | nominal MFR of starting polymer (g/10 min) | amount BSA (mole polyazide/mole polypropylene) | MFR of reaction product (g/10 min) |
|---|---|---|---|
| C.S. C | 35 | 0.000 | 36.7 |
| Ex. 5 | 35 | 0.245 | 30.1 |
| Ex.6 | 35 | 0.489 | 20.4 |
| Ex. 7 | 35 | 0.734 | 14.8 |
| Ex. 8 | 35 | 0.978 | 2.0 |
| C.S. D | 20 | 0.000 | 20.2 |
| Ex. 9 | 20 | 0.389 | 13.8 |
| Ex. 10 | 20 | 0.778 | 5.3 |
| C.S. E | 12 | 0.000 | 12.4 |
| Ex. 11 | 12 | 0.366 | 4.2 |
| Ex. 12 | 12 | 0.548 | 2.4 |

Where the MFR 35 isotactic polypropylene is commercially available from Montell, NA under the trade designation Protax PD-701, the MFR 20 isotactic polypropylene is commercially available from Montell, NA under the trade designation Profax 6231 and the MFR 12 isotactic polypropylene is commercially available from Montell, NA under the trade designation Profax 6323.

Table Ex 5 illustrates the advantages of using lower molecular weight starting material in that a larger range of chain coupled polypropylene products were possible by starting with a MFR 35 isotactic polypropylene (Mw∼186,000) as compared with a MFR 12 isotactic polypropylene (Mw∼278,000). One can see that using a lower MW isotactic polypropylene as the starting material affords a range of chain coupled isotactic polypropylene products with melt flow rates of 2-35 that remain easy to process, as opposed to starting with a high MW isotactic polypropylene that reaches an less desirable low melt flow rate (for example 1-2) even after reaction with a relatively small amount of BSA.

### Example 13 and Comparative Sample F: Enhanced isotactic polypropylene/ polyolefin elastomer blends

For Example 13, 700g of isotactic polypropylene pellets (commercially available from Montell NA under the trade designation 6231, MFR=20) and 300g of ethylene/octene elastomer pellets (commercially available from Dupont Dow Elastomers LLC under the trade designation ENGAGE 8200) were uniformly coated with 1g of silicon oil by adding the silicon oil to the pellets and then tumbling the mixture for one hour. To this mixture was added 1g of solid powder oxy-bis([4-sulfonylazido]benzene) (BSA) and 0.5 g of thermal stabilizer commercially available from Ciba-Geigy under the trade designation Irganox B-225 followed by tumbling for an additional hour to uniformly coat the polypropylene pellets with the solid powder. The pellets were fed into a 20mm twin-screw extruder commercially available from Welding Engineers running at 200 rpm with the following temperature profile:

**Table Ex. 13A**

| Zone | Set temperature °C | Temperature of melt stream °C |
|---|---|---|
| Zone 1 (feed) | 170°C | polymer not melted. |
| Zone 2 | 180°C | |
| Zone 3 | 190°C | |
| Zone 4 | 200°C | |
| Zone 5 | 210°C | 205°C |
| Zone 6 | 210°C | |
| Zone 7 | 210°C | |
| Die | 200°C | |

The product TPO (thermoplastic polyolefin) that exits the die of the extruder was cooled in a water bath and granulated in a chopper. In addition, a control sample (C.S. F), containing no BSA coupling agent, was also compounded under identical conditions Both materials were injection molded into tensile and impact test specimens on a injection molder commercially available from Boy. Inc. under the trade designation Boy 30M. The physical properties of these samples were then tested using standard ASTM procedures as designated in the table:

**Table Ex. 13B**

| | C.S. F | Metric Conversion | Example 13 | Metric Conversion |
|---|---|---|---|---|
| Break Tensile (psi) ASTM D638 | 2260 | 15.6 MPa | 2720 | 18.8 MPa |
| Break Elongation ( percent) ASTM D638 | 154 | 154 percent | 91 | 91 percent |
| Flex Modulus (psi) ASTM D790 | 109,600 | 756 Mpa | 127,900 | 882 MPa |
| lzod Impact Energy (ft-lb/in. 22°C) ASTM D236 | 6.9 | 368 J/m | 12.1 | 646 J/m |
| MTS Peak Impact Energy (in-lb, -30°C) ASTM D3763-93 | 110 | 12.4 J | 211 | 23.8 J |
| MTS Total Impact Energy (in-lb, -30°C) ASTM D3763-93 | 112 | 12.7 J | 350 | 39.6 J |
| Ductility Index ([E_{T}-E_{P}]/Eᵣ) | ∼0 (brittle) | ∼0 | 0.40 (ductile) | 0.40 |
| HDTUL (°C, 66psi load) ASTM D648 | 71 | 71°C | 79 | 79°C |
| CLTE (cin/cm/°CxE-5) ASTM D696 | 7.65 | 7.65 | 7.77 | 7.77 |
| Melt Flow Rate (g/10min) ASTM D1238 | 17 | 17 g/10 min | 12 | 12.g/10min |

The most significant difference between these samples was the impact energy at -30 °C, as measured by MTS dart impact (ASTM D3763-93). The control (C.S. F) displayed only brittle failure, while the reactively coupled TPO (Ex. 13) was completely ductile in character. The relative dispersion can be seen in transmission micrographs which show Example 13 to have significantly smaller dispersed phase particles as compared with (C.S. F). Images of the micrographs were analyzed using software commercially available from Scion Corporation under the trade name ImagePC software to measure mean particle diameters of 0.23 µm for the dispersed phase in Example 13 and 0.57 µm for the dispersed phase in Comparative Sample F. This method of counting and measuring the average dimensions of dispersed phase polymer particles is within the skill in the art. Such electron micrographs and their interpretation is within the skill in the art such as illustrated in copending U.S. Application serial number 60/057713, filed August 27, 1997.

Evidence for the formation of chain coupled structures came from DMS measurements of the reactively coupled TPO (Example 13) and the control (Comparative Sample F). As described before, branched or coupled structures lead to higher low-shear viscosities accompanied by "shear thinning" at higher shear rates. Reactively coupled TPO of Example 13 exhibited this behavior compared to the control blend (C.S.F) of linear materials.

Viscosity and angular frequency were as measured by Dynamic Mechanical Spectroscopy

### Example 14, Comparative Sample G: TPE materials

Two TPE materials were prepared in a commercially available Haake mixer at 200 °C/100 rpm/5 min with the following compositions:

**Table Ex 14A**

| Component | Control TPE (Comparative Sample G) | Coupled TPE (Example 14) |
|---|---|---|
| MFR 35 iPP* | 13.3 g | 13.3 g |
| E/O Elastomer** | 26.7 g | 26.7 g |
| BSA | 0.10 g | none |

| | | |
|---|---|---|
| *an isotactic polypropylene of MFR 35 commercially available from Montell under the trade designation Profax PD-701. | | |
| **an elastomer of ethylene and octene commercially available from The Dow Chemical Company under the trade designation AFFINITY 8200. | | |

The product TPE materials were compression molded on a heated compression molding press commercially available from Tetrahedron under the trade designation Model 14 at 200 °C and analyzed by transmission electron microscopy to characterize the isotactic polypropylene dispersion and DMS (temperature sweep) to determine the modulus vs. temperature behavior. Better stress transfer between phases of Example 14 over Comparative Sample G was evidenced by the modulus response of the materials as a function of temperature.

**Table Ex 14B**

| Temperature | storage modulus of C.S. G | storage modulus of Example 14 | Difference in storage moduli | difference as percentage of C.S. G storage modulus |
|---|---|---|---|---|
| -100.1 | 1.10E+10 | 1.15E+10 | 5.00E+08 | 4.5 percent |
| -90.1 | 1.03E+10 | 1.09E+10 | 6.00E+08 | 5.8 percent |
| -79.9 | 9.52E+09 | 1.01E+10 | 5.80E+08 | 6.1 percent |
| -69.7 | 8.58E+09 | 9.13E+09 | 5.50E+08 | 6.4 percent |
| -59.8 | 6.71E+09 | 7.08E+09 | 3.70E+08 | 5.5 percent |
| -49.8 | 3.25E+09 | 3.63E+09 | 5.80E+08 | 17.8 percent |
| -39.7 | 1.41E+09 | 2.08E+09 | 6.70E+08 | 47.5 percent |
| -29.8 | 7.81 E+08 | 1.38E+09 | 5.99E+08 | 76.7 percent |
| -19 | 4.56E+08 | 1.04E+09 | 5.84E+08 | 128.1 percent |
| -9.1 | 3.47E+08 | 8.15E+08 | 4.68E+08 | 134.9 percent |
| 0.5 | 2.86E+08 | 6.53E+08 | 3.67E+08 | 128.3 percent |
| 9.9 | 2.30E+08 | 5.37E+08 | 3.07E+08 | 133.5 percent |
| 19.7 | 1.86E+08 | 4.53E+08 | 2.67E+08 | 143.5 percent |
| 29.5 | 1.44E+08 | 3.75E+08 | 2.31 E+08 | 160.4 percent |
| 40.2 | 9.71E+07 | 2.63E+08 | 1.66E+08 | 170.9 percent |
| 50.2 | 6.55E+07 | 1.85E+08 | 1.20E+08 | 182.4 percent |
| 60.2 | 3.96E+07 | 1.24E+08 | 8.44E+07 | 213.1 percent |
| 70.3 | 1.68E+07 | 7.47E+07 | 5.79E+07 | 344.6 percent |
| 80.2 | 2.88E+06 | 4.68E+07 | 4.39E+07 | 1525.0 percent |
| 90.3 | 9.47E+05 | 3.95E+07 | 3.86E+07 | 4071.1 percent |
| 100.5 | 6.51 E+05 | 2.75E+07 | 2.68E+07 | 4124.3 percent |
| 110.4 | 4.73E+05 | 2.72E+07 | 2.67E+07 | 5650.5 percent |
| 120.3 | 3.65E+05 | 2.41E+07 | 2.37E+07 | 6502.7 percent |
| 130.4 | 2.67E+05 | 1.95E+07 | 1.92E+07 | 7203.4 percent |
| 140.3 | 1.93E+05 | 1.62E+07 | 1.60E+07 | 8293.8 percent |
| 150.2 | 1.40E+05 | 1.38E+07 | 1.37E+07 | 9757.1 percent |
| 160.5 | 9.54E+04 | 7.45E+06 | 7.35E+06 | 7709.2 percent |
| 170.8 | 5.68E+04 | 1.43E+06 | 1.37E+06 | 2417.6 percent |
| 180.5 | 1.34E+04 | 1.08E+05 | 9.46E+04 | 706.0 percent |
| 190.2 | 9.25E+03 | 9.80E+04 | 8.88E+04 | 959.5 percent |
| 200.1 | 1.30E+04 | 6.20E+04 | 4.90E+04 | 376.9 percent |

The control TPE (C.S. G) drops significantly in modulus above 50 °C, while the reactively coupled TPE (Ex. 14) maintains roughly two orders of magnitude more modulus out to 150°C. Thus, the potential end use temperature of the reactively coupled TPE would be significantly greater as a result of this difference in behavior.

The elastic and viscous properties of polymeric materials as a function of temperature and frequency can provide valuable information relevant to their fabrication and end use. As such, these tests are useful in comparing different polymeric materials. For example, a higher elastic modulus at a given temperature will translate to greater stiffness in an equivalent part. Also for example, a lower rubber-to-glass transition temperature will generally translate to better low temperature toughness.

Tests used to generate the data in Table 14B were performed on rectangular bars of polymer (ca. 2.5" x 0.5" x 0.125") using a dynamic mechanical spectrometer. The specific equipment used measures the torque signal at one end of the specimen in response to a sinusoidally varying torsional strain that was applied at the other end (Model RDS-IIE dynamic mechanical spectrometer equipped with a mid-range force rebalance transducer and with an environmental chamber for elevated temperature operation, manufactured by Rheometrics, Inc., Piscataway. N. J.). The instrument also determines the phase angle between the torque output and strain input signals. The stress magnitude was related to the torque magnitude by means of a proportionality factor which was a function of specimen dimensions. Knowing the phase angle between stress and strain, the stress signal can be decomposed into components in-phase and out-of-phase with the strain. The in-phase and out-of-phase responses correspond to the elastic and viscous responses of the material, respectively. The dynamic shear storage modulus (G') was calculated as the ratio of the in-phase portion of the stress to the strain, and the dynamic shear loss modulus (G") as the ratio of the out-of-phase portion of the stress to the strain. The final outputs of the instrument were the dynamic shear storage and loss moduli, G' and G", which were the elastic and viscous responses, respectively. The ratio G"/G' is known as the loss tangent or tan δ. This test procedure gives values for G', G", and the loss tangent at different temperatures at fixed torsion frequency. Further general information on measurement of dynamic mechanical properties and their phenomenology and molecular-level interpretation can be found in standard texts (for example, J. D. Ferry, "Viscoelastic Properties of Polymers, 3rd Edition", published by John Wiley and Sons).

Again Transmission Electron Microscopy shows much finer dispersion results from practice of the present invention.

### Examples 15 and 16: Coupling at two Temperatures

For Example 15, 200g of an isotactic polypropylene of MFR 20 commercially available from Montell Polyolefins under the trade designation 6231 was loaded into the bowl of a Haake melt mixer operating at 100 rpm with a set temperature of 170 °C along with 0. 10g of stabilizer commercially available from Ciba Gcigy Corporation under the trade designation Irganox B-225. After melting of the polymer, the melt temperature (temperature of molten polymer) was 200 °C at which point, 0.20g of oxy-bis(4-sulfonylazidobenzene) was added and the coupling reaction was allowed to proceed for 5 minutes. The apparatus was cooled and the polymer was removed. For Comparative Sample GG, a similar experiment was conducted under the same conditions except that a set temperature of 200 °C was used, which resulted in a melt temperature of 240 °C once the polymer had completely melted. In this second case (C.S. GG) at the higher melt temperature, the polymer did not afford a significant (sharp) increase in torque, which would indicate an increase in molecular weight (thus melt viscosity) through chain coupling.

### Example 17 and Comparative Sample H: Practice of the invention using styrenic materials:

(A) For Example 17. 40 g of polystyrene commercially available from The Dow Chemical Company under the trade designation Styron™ 615 was heated and mixed in a Brabender Plasticorder reactor at 200 °C at 80 rpm, followed by the addition of 0.10 grams of oxy-bis[(4-sulfonylazido)benzene]. The mixture was allowed to react in the reactor for 5 minutes and then removed and analyzed by dynamic mechanical spectroscopy (DMS) and gel permeation chromatography (GPC). A control sample (C.S. H) was also run in the same manner only without the poly(sulfonyl azide). The DMS data indicate an increase in the low shear melt viscosity indicative of chain coupling in the example (Example 17) reacted with the poly(sulfonyl azide) as compared with the control C.S. H.
   The GPC data also supports chain coupling of the polystyrene as a consequence of reaction with the poly(sulfonyl azide) compound as evidenced by the shoulder on the high molecular weight side of the curve versus the control sample. The measured Mw for Example 17 was 242.300 with an Mw/Mn of 2.58 and the Mw of C. S. H was 199,100 with an Mw/Mn of 2.35.
(B) For Example 18, a similar experiment was carried out in which a blend of 20 grams of polystyrene (same as the starting material for Example 17) and 20 grams of ethylene/octene polyolefin elastomer commercially available from The Dow Chemical Company under the trade designation AFFINITY EG8150 were melted and mixed in a Brabender Plasticorder reactor at 200 °C and 80 rpm, followed by the addition of 0.10 grams of oxy-bis[(4-sulfonylazido)benzene]. The mixture was allowed to mix and react for 5 minutes and was then removed and allowed to cool. A control (C.S. J) run was carried out in exactly the same manner only without the poly(sulfonyl azide). Both samples were then compression molded into small plaques using a Tetrahedron Model 14 compression molder at 200 °C. The morphology of the samples was then characterized using transmission electron microscopy which showed much finer phase dispersion in the practice of the invention (Example 18) than C.S. J.

These data indicate a finer dispersion of polystyrene and POE in Example 18 when the blend was allowed to react with poly(sulfonyl azide) as compared with C.S. J, the control sample, which possesses a very course dispersion of polystyrene and POE and poor interfacial adhesion between the materials.

DSC curves of a polypropylene treated according to the practice of the invention, a commercial propylene homopolymer and a commercial propylene/ethylene random copolymer, show the peak at the decomposition temperature of oxy-bis(4-sulfonylazidobenzene), to be 186°C and the initial softening to melting temperatures of a typical isotactic polypropylene to be 154 to 158°C of a random copolymer of propylene to be 132-154°C.

### Example 19: Illustrating Partially Melted Polyolefin Intimately Mixed with Poly(sulfonyl azide) Prior to Actual Reaction Between Them:

A 11.3 Kg sample of polypropylene commercially available from Montelt Polyolefins. Inc. under the trade designation Profax 6231 was coated with 100 g of silicon oil and tumbled for two hours to evenly distribute the oil onto the polypropylene pellets. To this mixture, 12.7 g of oxybis(sulfonylazidobenzene) and 10.0 g of stabilizer commercially available from Ciba-Geigy under the trade designation B-225 powders were added. The mixture was tumbled for two hours to evenly coat the powders onto the surface of the polypropylene pellets. This mixture was extruded on a W-P 30mm twin-screw extruder commercially available from Werner-Pfliederer running at 100 rpm with a temperature profile (of set temperature) ranging from 170 °C at the feed zone through 180 °C at the final zone before the die. The melt temperature (temperature of the polymer stream) observed just before the die was 213 °C, indicating that the temperature of the melt had increased significantly due to mechanical shear mixing of the polyolefin, in addition to the heat supplied by the extruder zones. Thus, the polymer achieved a temperature profile from 170 °C at the feed zone (no additional shear heating) to 213 °C near the end of the extruder. The extruder was cooled rapidly by circulating large volumes of cold water through the various extruder zones (as allowed by equipment design) to quench the melt within and then opened to allow samples to be taken from various positions along the extruder screw for subsequent molecular weight and rheological analysis.

Table Ex 19A shows that the polymer Mw increased somewhat going from 24 to 30 inches (from the feed port) and more from 30 to 36 inches and the MWD increased somewhat up to 30 inches but very rapidly between 30 and 36 inches.

**Table Ex19A**

| Screw Position inches from extruder feed port | iPP Mw | iPP MWD |
|---|---|---|
| 19+ | 233400 | 6.12 |
| 24+ | 231100 | 7.41 |
| 30+ | 281100 | 7.61 |
| 36+ | 363300 | 12.02 |

Table Ex 19B shows the viscosity at various annular frequencies of each sample in Table F17: At lower frequencies the material from 19 inches from the feed port is much less viscous than each succeeding sample with material extruded from the die much more viscous than previous positions. Differences in viscosity narrow very significantly at 100 rads.

**Table Ex 19B**

| Frequency (rad/sec) | +19 inches | +24 inches | +30 inches | +36 inches | After Die |
|---|---|---|---|---|---|
| 0.10 | 10733.7 | 15450.9 | 26022.5 | 31059.9 | 72665.4 |
| 0.16 | 10024.2 | 13875.3 | 22770.8 | 26781.9 | 58269.4 |
| 0.25 | 9371.8 | 12857.8 | 19991.2 | 23347.9 | 46844.8 |
| 0.40 | 8779.5 | 11735.2 | 17525.5 | 20247.1 | 37666.2 |
| 0.63 | 8164.1 | 10710.5 | 15206.3 | 17501.3 | 30348.6 |
| 1.00 | 7556.9 | 9616.3 | 13150.5 | 14973.0 | 24438.7 |
| 1.58 | 6911.4 | 8596.9 | 11259.3 | 12752.0 | 19564.1 |
| 2.51 | 6275.5 | 7624.2 | 9570.9 | 10725.9 | 15760.0 |
| 3.98 | 5565.2 | 6595.8 | 8093.8 | 9032.3 | 12521.0 |
| 6.31 | 4999.8 | 5749.9 | 6815.0 | 7615.9 | 10044.2 |
| 10.00 | 4356.5 | 4937.2 | 5654.2 | 6260.0 | 7967.9 |
| 15.85 | 3749.8 | 4185.4 | 4671.9 | 5170.0 | 6289.9 |
| 25.12 | 3183.8 | 3489.7 | 3820.2 | 4218.5 | 4949.1 |
| 39.81 | 2665.6 | 2878.2 | 3100.7 | 3418.4 | 3872.9 |
| 63.10 | 2196.1 | 2342.5 | 2487.5 | 2742.8 | 3005.8 |
| 100.00 | 1780.3 | 1874.7 | 1969.3 | 2174.4 | 2311.6 |

The ability to soften the polymer prior to actual reaction was enhanced by using a lower molecular weight polypropylene, that is less than 275,000 molecular weight. It is well known in the art that lower molecular weight polymers soften and flow at a given temperature more easily than polymers of higher relative molecular weight.

### Example 20: Advantages of Chain Coupling in Fabrication.

The sample of coupled iPP prepared as in Example 19 was extruded into a sheet (13 inches wide by 0. 10 inches thick) on a Sterling sheet extrusion line and then thermoformed on a AAA vacuum thermoformer into rectangular containers (8 inches by 10 inches) at a 4: 1 draw ratio. As a control (C.S. K), a linear commercial polypropylene commercially available from Montell Polyolefins Inc. under the trade designation Montell S30S that was typically used in thermoforming was also tested. Likewise, a commercial branched iPP commercially available from Montell Polyolefins Inc. under the trade designation Montell PF814 believed to be prepared as described in US 4,916,198, US 5,414,027 and US 5,554,668 (all assigned to Montell) was also extruded into sheet and thermoformed (C.S. K'). The samples were all tested for the temperature range under which acceptable parts could be made without excessive sheet sagging (that is acceptable melt strength). The following table shows that the coupled polypropylene prepared by practice of this invention gave superior performance in the thermoforming application.

**Table Ex 20**

| Polymer | Highest Sheet Temperature without sag. (°F) | Highest Sheet Temperature without sag (°C) |
|---|---|---|
| C.S. K Montell S30S | 415 | 213 |
| C.S. K' Montell PF814 | 425 | 218 |
| Ex. 20 Bis-Azide Coupled iPP | 454 | 234 |

It is known in the art that the ability of a thermoforming resin to resist sagging over as wide a temperature range as possible is highly desirable. This minimizes the effect of processing temperature variations on the quality of the thermoformed parts produced.

### Example 21 and 22: Comparison of Narrow Molecular Weight and broader molecular weight starting materials:

For Example 21, 40 grams of narrow molecular weight distribution polypropylene (commercially available from Exxon Chemical Company under the trade designation Achieve 3904: Mw = 185,500) was placed into the heated bowl of a Brabender Plasticorder and melt mixed at 200 °C. When the polymer had completely melted. 0.05 grams of stabilizer (commercially available from Ciba Geigy Inc. under the trade designation Irganox B-225) and 0.10 grams of oxy-bis(4-sulfonylazidobenzene) were added to the polymer melt and mixing was continued at 100 rpm for five minutes at 200°C. The polymer was then removed from the bowl of the Brabender mixer and allowed to cool. It gave a Mw = 294.200. A conventional broad molecular weight distribution polypropylene-material (commercially available front Montell Polyolefins Inc. under the trade designation Profax 6231: Mw = 239.000) was coupled by the same procedure to form Example 22. This sample had Mw = 292,000.

The starting polymer and the product of the above example were characterized by differential scanning on equipment calorimetry (commercially available from DuPont Instruments under the trade designation 2910 DSC) to determine the melting and crystallization behavior of the materials. It was observed that the narrow MWD polypropylene (Example 21) demonstrated a significantly broader melting point relative to the narrow MWD polypropylene starting material untreated with bis-azide. This result was unexpected relative to similar experiments on conventional broad MWD polypropylene (Example 22) treated in a similar manner. Broader melting point polypropylenes were useful in thermoforming, blow molding, foam, and film applications. Broadening of the crystalline melting point serves to widen the thermal processing temperature window for the material.

### Example 23: Illustrating the effect of residue time on molecular weight increase (and, thus, coupling)

The following experiment was carried out on a Werner-Pfliederer 30 mm twin-screw extruder (as described in Example 19) running at 100 rpm using MFR 35 polypropylene (commercially available from Montell Polyolefins, Inc. under the trade designation Montell PD701) as the feedstock and 1250 ppm of the bis-sulfonyl azide of diphenyl oxide (DPO-BSA). The residence time in the extruder was varied over the range indicated in Table Ex 23 by changing the screw position relative to the barrel, which created a plug-flow zone in front of the die. The polymer melt temperature was varied by changing the extruder zone set temperatures.

**Table Ex. 23**

| Minimum Residence Time in the Extruder /Melt Temperature | Difference Between Starting PP and Product PP Weight-Average MW |
|---|---|
| 27 scc/ 203°C | 8000 |
| 36 scc/ 207°C | 28000 |
| 28 sec/ 227°C | 74000 |
| 48 sec/ 228°C | 104000 |

It can be seen that residence times measured in minutes were needed to afford ample time for the coupling chemistry to run to completion even though shorter times were effective in achieving lower amounts of coupling.

### Example 24: Further indicating the effect of reaction time on molecular weight increase (and, thus, coupling)

In the following experiment, 40 grams of MFR 35 polypropylene homopolymer (commercially available from Montell Polyolefins under the trade designation Montell PD701) was heated in a Haake mixer at 200 or 230 °C and 1500 ppm of DPO-BSA was added. A small amount of the polymer was removed from the reaction and quenched with dry ice at regular time intervals. These samples were then analyzed by GPC to follow the Mw of the polypropylene as a function of time. An increase in Mw was observed, which reaches a maximum. The results are tabulated in Table Ex. 24.

**Table Ex. 24**

| Reaction Time at 200 °C (minutes) | PP Mw (g/mole, 200°C rxn) | Reaction Time at 230 °C (minutes) | PP Mw (g/mole, 230°C rxn) |
|---|---|---|---|
| 0.0 | 200000 | 0 | 195000 |
| 0.5 | 201000 | 0.33 | 203000 |
| 1.0 | 205000 | 0.78 | 227000 |
| 1.5 | 219000 | | 253000 |
| 2.0 | 238000 | 2 | 282000 |
| 2.5 | 251000 | 5 | 239000 |
| 3.0 | 262000 | | |
| 4.0 | 272000 | | |
| 5.0 | 278000 | | |
| 10.0 | 253000 | | |

This was followed by a decrease in Mw as the coupling reaction was finished and thermal degradation of the polypropylene took place. When highest Mw is desired, it is preferred to allow the admixture of polymer and poly(sulfonyl azide) to remain at least one temperature above the decomposition temperature for a time sufficient to achieve the maximum or near maximum Mw increase but to avoid exposure to that temperature for a time sufficient to result in sufficient degradation to result in a lowering of Mw.

### Example 25: Illustrating effect of reaction time on remaining concentration of poly(sulfonyl azide)

In this experiment, 40 grams of atactic polypropylene prepared using (η⁵-tetramethylcyclopentadienyl-tert-butylamide dimethylsilane) titanium (η4-1,3-pentadiene) according to the teachings of US 5,470,993 catalyst was mixed with 1 weight percent DPO-BSA in a Haake mixer at 100 °C for two minutes. This material was then analyzed by calorimetry and DSC to determine the kinetics of the reaction as measured by the concentration of unreacted DPO-BSA divided by the initial concentration of DPO-BSA ([BSA]/[BSA]₀) as a function of time. Results are tabulated in Table 25.

**Table Ex. 25**

| Reaction Time (seconds) | Fraction of Unreacted BSA at 200 °C | Fraction of Unreactcd BSA at 230 °C |
|---|---|---|
| 0 | 1.000 | 1.000 |
| 15 | 0.898 | 0.557 |
| 30 | 0.806 | 0.310 |
| 45 | 0.723 | 0.173 |
| 60 | 0.649 | 0.096 |
| 90 | 0.523 | 0.030 |
| 120 | 0.421 | 0.009 |

From this data it is evident that the time to react BSA is a function of temperature and that for temperatures of 200-230 °C; residence time for completion of BSA decomposition was at least 2 minutes.

### Examples 26-31 and C.S. M and N: Illustrating broad range of part forming temperatures for coupled materials,

A series of coupled PP samples were prepared on the 30 mm Werner Pfleiderer twin-screw extruder described in Example 19 running at 100 rpm with a melt temperature of approximately 220 °C**.** These resins were then extruded into sheet 14 inches wide and 0.125 inches thick, along with two linear polyprolene control materials, as C.S. M. a polypropylene resin of MFR 0.6 commercially available from Montell Polyolefins under the trade designation D50S and as C.S. N, a polypropylene resin of MFR 2.4 commercially available from BASF Corp. under the trade designation 1102 (MFR=0.6 and 2.4. respectively). Sections of sheet were thermoformed as described in Example 20 at a 3.5 to 1 draw ratio. The temperature range over which pans of acceptable quality could be thermoformed was then measured for each resin.

**Tables Ex. 26A**

| Coupled PP Samples for Thermoforming | | | |
|---|---|---|---|
| Example or Comparative Sample | Starting Material-NffR* | BSA. ppm | Product MFR |
| Ex. 26 | H702-35 polypropylene | 1500 | 3.9 |
| Ex. 27 | H701-20 polypropylene | 500 | 9.6 |
| Ex. 28 | H701-20 polypropylene | 750 | 4.9 |
| Ex. 29 | H701-20 polypropylene | 1000 | 2.6 |
| Ex. 30 | H700-12 polypropylene | 500 | 4.7 |
| Ex. 31 | H700-12 polypropylene | 750 | 1.1 |
| C. S. M | Montell D50S-0.6 polypropylene | 0 | 0.6 |
| C. S. N | BASF 1102-2.4 polypropylene | 0 | 2.4 |

| | | | |
|---|---|---|---|
| *Polypropylene starting materials for the examples of the invention were polypropylene resins from The Dow Chemical Company under the trade designations shown namely H700-12 polypropylene, H70t-20 polypropylene and H702-35 polypropylene. | | | |

**Table Ex. 26B**

| Sample Name | Lower Good Part Temp. | Upper Good Part Temp. |
|---|---|---|
| C.S. M | 340 | 450 |
| C.S. N | 340 | 340 |
| Ex. 26 | 340 | 420 |
| Ex. 27 | 340 | 400 |
| Ex. 28 | 340 | 400 |
| Ex. 29 | 340 | 425 |
| Ex. 30 | 340 | 400 |
| Ex.31 340 Ex. 31 | 300 340 | 400 |

Clearly, the coupled resins (Ex. 26 - Ex. 31) demonstrated a much broader thermoforming window relative to a linear polypropylene control of comparable MFR (C.S. N). The linear polypropylene of C.S. M gave a broad thermoforming window, however, this material was difficult to fabricate (extrude) into the sheet to be thermoformed due to its very high molecular weight which caused it to require higher extrusion temperatures, higher extruder motor torque or a combination thereof in order to be converted into sheet prior to thermoforming.

### Examples 32-37 and Comparative Samples P-U Illustrating improved impact modifying efficiency using coupling

The procedure of Example 13 was repeated for Examples 32-37 and Comparative Samples P-U except that the propylene polymer was commercially available from Montell North America under the trade designation Profax PD701 MFR 35 PP and the elastomeric phase was an ethylene/octene copolymer commercially available from Dupont Dow Elastomers LLC under the trade designation Engage 8100, they were used in the relative amounts indicated in Table Ex32. The examples of the invention were each reacted with 1 g of the oxy-bis([4-sulfonylazido]benzene) (BSA): whereas the Comparative Samples were admixed with the other additives listed in Example 13, but not the BSA. Total impact energy was measured according to the procedures of ASTM D3763-93 as listed in the table:

**Table Ex32:**

| Efficiency from Coupling | | | | | | |
|---|---|---|---|---|---|---|
| Weight percent elastomer | Comparative Sample Number | MTS Total Impact @ -30 °C in in-lb | metric conversion Joules | Example MTS Total Number Impact @ -30 °C in in-lb | | metric conversion Joules |
| 0 | C.S.P. | 6 | 0.68 | Ex 32 | 6 | 0.68 |
| 10 | C.S. Q | 11 | 1.25 | Ex 33 | 17 | 1.93 |
| 20 | C.S. R | 13 | 1.47 | Ex 34 | 52 | 5.90 |
| 25 | C.S. S | 134 | 15.19 | Ex 35 | 283 | 32.09 |
| 30 | C.S. T | 331 | 37.53 | Ex 36 | 400 | 45.36 |
| 35 | C.S. U | 334 | 37.87 | Ex 37 | 415 | 47.06 |

The data in Table Ex32 shows that whereas impact resistance was not improved when there were not two phases (Ex 32 and-C.S. P); it was improved by coupling in a TPO having a propylene polymer and an elastomer over a TPO having the same constituents but without coupling. Thus, efficiency of impact modification was improved with coupling according to the practice of the invention. The effect was particularly notable as the impact improvement from adding increasing elastomer begins to plateau such as between C.S. T and C.S. U at 30 and 35 weight percent elastomer, respectively where little difference was seen without coupling but more difference was seen with coupling in Ex 36 and Ex 37. It appears that more elastomer is useful to achieve increased impact resistance in coupled blends than in blends without coupling according to the practice of the invention.

## Claims

1. A process of preparing a rheology modified polyolefin, **characterized by** the steps of:
(a) mixing at least one polyolefin with a rheology modifying amount of a poly(sulfonyl azide) at a temperature, referred to hereafter as a mixing temperature which is at least the softening temperature of the polyolefin but less than the decomposition temperature of the poly(sulfonyl azide} to form a substantially uniform admixture of polyolefin and poly(sulfonyl azide); and
(b) heating the substantially uniform admixture of polyolefin and poly(sulfonyl azide) to a temperature, referred to hereafter as a reaction temperature, which is at least the decomposition temperature of the poly(sulfonyl azide); and
(c) extruding the rheology modified polyolefin through a die to form an article capable of being made into pellets, steps (a) and (b) taking place in an extruder and the extruding step of (c) taking place from the same extruder used for (a) and (b).

2. The process of claim 1, wherein step (b) takes place at a temperature at least 5°C above the mixing temperature and at least the peak decomposition temperature of the poly(sulfonyl azide) and wherein the admixture contains from 0.01 to 0.5 weight percent of poly(sulfonyl azide).

3. The process of claim 1 or 2, wherein the polyolefin is a propylene polymer.

4. The process of any of claims 1, 2 or 3, wherein both steps (a) and (b) take place in the same vessel and wherein the polyolefin comprises a propylene polymer having a molecular weight less than 275,000 and greater than 100,000.

5. The process of claim 1, wherein there are at least three temperatures between 160°C and 230°C including the mixing and reaction temperatures, each temperature differing from the others by at least 5°C, at least one reaction temperature being at least 5°C above the decomposition temperature of the poly(sulfonyl azide) and at least one mixing temperature being at least 5°C above the softening temperature of the polyolefin and at least 5°C below the decomposition temperature. of the poly(sulfonyl azide), and all three temperatures occurring within a single vessel and wherein step (b) takes place at a temperature (T_{R}) of at least. 200°C to 230°C for a period of time (tᵣ) corresponding to at least 4 minutes at 200°C and at least 2 minutes at a temperature of at least 230°C, said. time corresponding to the equation tᵣ = 4-(T_{R}-200)^{.}0.1.

6. The process of any of claims 1 to 5, wherein at least one poly(sulfonyl azide) has a structure X-R-X wherein each X is SO₂N₃ and R respresents an unsubstituted or inertly substituted hydrocarbyl, hydrocarbyl ether or silicon-containing group, the poly(sulfonyl azide) has from at least 3 to 50 carbon, silicon or oxygen atoms between sulfonyl azide groups, and R includes at least one aryl group between the sulfonyl azide groups.

7. A process of preparing a rheology modified polyolefin, **characterized by** a step of
(a) heating a substantially uniform admixture of a polyolefin and a rheology modifying amount of a poly(sulfonyl azide) to a temperature, referred to hereafter as a reaction temperature, which is at least the decomposition temperature of the poly(sulfonyl azide), and wherein the polyolefin comprises a blend of at least one non-elastomeric polymer and at least one elastomeric polymer, wherein the non-elastomeric polymer is a propylene polymer, wherein the elastomeric polymer has at least 40 weight percent ethylene repeating units, and wherein the weight ratio of non-elastomeric polymer to elastomeric polymer is from 0.75 to 0.15, and wherein the poly(sulfonyl azide) is used in an amount sufficient to increase the impact strength of the blend or increase the dispersion of at least one polymer in the blend.

8. A process for preparing a rheology modified Polyolefin, **characterized by** a step of
(a) heating a substantially uniform admixture of a propylene polymer having a molecular weight greater than 100,000 and less than about 250,000 and a rheology modifying amount of a poly(sulfonyl azide) to a temperature, referred to hereafter as a reaction temperature, which is at least the decomposition temperature of the poly(sulfonyl azide).

9. A blend composition comprising a composition made by the process of any of claims 1-8 with at least one additional polymer.

10. Use of a composition of claim 9 in a process of thermoforming, injection molding, extrusion, extrusion coating, casting, blow molding, foaming, film forming, or blowing.

11. An article which is thermoformed, injection molded, extruded, cast, blow molded, blown, foamed, or molded articles of a composition of claim 9 or a product of the use of claim 10.

12. An article which is a foam, film, or fiber of a composition of claim 9 or a product of the use of claim 10.

13. The article of claim 11 or 12 which is a pickup bed liner or refrigerator part, tub, or container.

14. The process of claim 1, wherein the extruder has an input means, an exit and a midpoint between the input means and exit, and wherein the extruder has more high shear mixing elements between the input means and the midpoint than between the midpoint and the exit.

## Patentansprüche

1. Verfahren zum Herstellen eines rheologiemodifizierten Polyolefins, **gekennzeichnet durch** die Schritte:
(a) Mischen mindestens eines Polyolefins mit einer rheologiemodifizierenden Menge eines Poly(sulfonylazids) bei einer Temperatur, die hier als Mischtemperatur bezeichnet wird, die mindestens die Erweichungstemperatur des Polyolefins jedoch geringer als die Zersetzungstemperatur des Poly(sulfonylazids) ist, um ein im Wesentlichen einheitliches Gemisch von Polyolefin und Poly(sulfonylazid) zu bilden; und
(b) Erhitzen des im Wesentlichen einheitlichen Gemischs von Polyolefin und Poly(sulfonylazid) auf eine Temperatur, die hier als Reaktionstemperatur bezeichnet wird, die mindestens die Zersetzungstemperatur des Poly(sulfonylazids) ist; und
(c) Extrudieren des rheologiemodifizierten Polyolefins **durch** eine Düse, um einen Gegenstand zu bilden, der in Pellets übergeführt werden kann, wobei die Schritte (a) und (b) in einem Extruder stattfinden und der Extrusionsschritt von (c) in dem gleichen Extruder stattfindet, der für (a) und (b) verwendet wird.

2. Verfahren nach Anspruch 1, worin Schritt (b) bei einer Temperatur von mindestens 5°C über der Mischtemperatur und mindestens der maximalen Zersetzungstemperatur des Poly(sulfonylazids) stattfindet und worin das Gemisch von 0,01 bis 0,5 Gewichtsprozent Poly(sulfonylazid) enthält.

3. Verfahren nach Anspruch 1 oder 2, worin das Polyolefin ein Propylenpolymer ist.

4. Verfahren nach einem der Ansprüche 1, 2 oder 3, worin beide Schritte (a) und (b) in dem gleichen Behälter stattfinden und worin das Polyolefin ein Propylenpolymer mit einem Molekulargewicht von kleiner als 275.000 und größer als 100.000 umfasst.

5. Verfahren nach Anspruch 1, worin mindestens drei Temperaturen zwischen 160°C und 230°C, einschließlich der Misch- und Reaktionstemperaturen vorliegen, wobei jede Temperatur sich von den anderen um mindestens 5°C unterscheidet, wobei mindestens eine Reaktionstemperatur mindestens 5°C über der Zersetzungstemperatur des Poly(sulfonylazids) und mindestens eine Mischtemperatür 5°C über der Erweichungstemperatur des Polyolefins und mindestens 5°C unter der Zersetzungstemperatur des Poly(sulfonylazids) ist und worin alle drei Temperaturen innerhalb eines einzelnen Behältnisses auftreten und worin Schritt (b) bei einer Temperatur (T_{R}) von mindestens 200°C bis 230°C für eine Zeitdauer (tᵣ) stattfindet, die mindestens 4 Minuten bei 200°C und mindestens 2 Minuten bei einer Temperatur von mindestens 230°C entspricht, wobei die Zeit der Gleichung tᵣ=4-(T_{R}-200) 0,1 entspricht.

6. Verfahren nach einem der Ansprüche 1 bis 5, worin mindestens ein Poly(sulfonylazid) eine Struktur X-R-X aufweist, worin jedes X SO₂N₃ ist und R eine unsubstituierte oder inert substituierte Kohlenwasserstoff-, Kohlenwasserstoffether- oder Silicium-enthaltende Gruppe bedeutet, das Poly(sulfonylazid) von mindestens 3 bis 50 Kohlenstoff-, Silicium- oder Sauerstoffatome zwischen Sulfonylazidgruppen aufweist und R mindestens eine Arylgruppe zwischen den Sulfonylazidgruppen umfasst.

7. Verfahren zum Herstellen eines rheologiemodifizierten Polyolefins, **gekennzeichnet durch** einen Schritt des
(a) Erhitzens eines im Wesentlichen einheitlichen Gemischs aus einem Polyolefin und einer rheologiemodifizierenden Menge eines Poly(sulfonylazids) auf eine Temperatur, die hier nachfolgend als eine Reaktionstemperatur bezeichnet wird, die mindestens die Zersetzungstemperatur des Poly(sulfonylazids) ist, und worin das Polyolefin ein Gemisch aus mindestens einem nichtelstomeren Polymer und mindestens einem elastomeren Polymer umfasst, worin das nichtelastomere Polymer ein Propylenpolymer ist, worin das elastomere Polymer mindestens 40 Gewichtsprozent Ethylen-Wiederholungseinheiten aufweist, und worin das Gewichtsverhältnis von nichtelastomerem Polymer zu elastomerem Polymer von 0,75 bis 0,15 ist, und worin das Poly(sulfonylazid) in einer Menge verwendet wird, die ausreichend ist, um die Schlagfestigkeit des Gemischs zu erhöhen oder die Dispersion von mindestens einem Polymer in dem Gemisch zu erhöhen.

8. Verfahren zum Herstellen eines rheologiemodifizierten Polyolefins, **gekennzeichnet durch** einen Schritt des
(a) Erhitzens eines im Wesentlichen einheitlichen Gemischs aus einem Propylenpolymer mit einem Molekulargewicht von größer als 100.000 und weniger als etwa 250.000 und einer rheologiemodifizierenden Menge eines Poly(sulfonylazids) auf eine Temperatur, die hier nachfolgend als eine Reaktionstemperatur bezeichnet wird, die mindestens die Zersetzungstemperatur des Poly(sulforiylazids) ist.

9. Gemischzusammensetzung, umfassend eine Zusammensetzung, hergestellt durch das Verfahren nach einem der Ansprüche 1-8, mit mindestens einem zusätzlichen Polymer.

10. Verwendung einer Zusammensetzung nach Anspruch 9 in einem Verfahren zum Thermoformen, Spritzgießen, Extrudieren, Extrusionsbeschichten, Gießen, Blasformen, Schäumen, Folienbilden oder Blasen.

11. Gegenstand, der thermogeformt, spritzgegossen, extrudiert, gegossen, blasgeformt, geblasen, geschäumt ist, oder Formkörper aus einer Zusammensetzung nach Anspruch 9 oder ein Produkt der Verwendung nach Anspruch 10.

12. Gegenstand, der ein Schaum, eine Folie oder Faser aus einer Zusammensetzung nach Anspruch 9 oder ein Produkt der Verwendung nach Anspruch 10 ist.

13. Gegenstand nach Anspruch 11 oder 12, welcher eine Pickup-Ladeflächenverkleidung oder ein Kühlschrankteil, Rohr oder Behälter ist.

14. Verfahren nach Anspruch 1, worin der Extruder ein Aufgabemittel, einen Austritt und einen Mittelpunkt zwischen dem Aufgabemittel und dem Austritt aufweist, und worin der Extruder mehr Hochschermischelemente zwischen dem Aufgabemittel und dem Mittelpunkt aufweist als zwischen dem Mittelpunkt und dem Austritt.

## Revendications

1. Procédé de préparation d'une polyoléfine à propriétés rhéologiques modifiées, **caractérisé par** les étapes suivantes, consistant :
a) à malaxer ensemble au moins une polyoléfine et un polysulfonylazide, utilisé en une quantité telle qu'il a pour effet de modifier les propriétés rhéologiques, à une température, appelée ci-après "température de malaxage", qui est au moins égale à la température de ramollissement de la polyoléfine, mais inférieure à la température de décomposition du polysulfonylazide, pour former un mélange pratiquement homogène de polyoléfine et de polysulfonylazide ;
b) à chauffer ce mélange pratiquement homogène de polyoléfine et de polysulfonylazide pour le porter à une température, appelée ci-après "température de réaction'', qui est au moins égale à la température de décomposition du polysulfonylazide ;
c) et à extruder la polyoléfine à propriétés rhéologiques modifiées en la faisant passer par une filière, de manière à en.faire un article qui puisse être réduit en pastilles ;
les étapes (a) et (b) ayant lieu dans une extrudeuse, et l'étape d'extrusion (c) ayant lieu dans la même extrudeuse que celle employée pour les étapes (a) et (b).

2. Procédé conforme à la revendication 1, dans lequel l'étape (b) se déroule à une température supérieure d'au moins 5 °C à la température de malaxage et au moins égale à la température du pic de décomposition du polysulfonylazide, et dans lequel le mélange contient de 0,01 à 0,5 % en poids de polysulfonylazide.

3. Procédé conforme à la revendication 1 ou 2, dans lequel la polyoléfine est un polymère de propylène.

4. Procédé conforme à la revendication 1, 2 ou 3, dans lequel les deux étapes (a) et (b) se déroulent dans le même récipient et dans lequel la polyoléfine comprend un polymère de propylène dont la masse molaire est inférieure à 275 000, mais supérieure à 100 000.

5. Procédé conforme à la revendication 1, au cours duquel on opère à au moins trois températures situées entre 160 et 230 °C, y compris la température de malaxage et la température de réaction, et dans lequel chacune de ces températures diffère des autres d'au moins 5 °C, au moins une température de réaction est supérieure d'au moins 5 °C à la température de décomposition du polysulfonylazide, au moins une température de malaxage est supérieure d'au moins 5 °C à la température de ramollissement de la polyoléfine et inférieure d'au moins 5 °C à la température de décomposition du polysulfonylazide, et c'est dans un seul récipient qu'on opère à toutes les trois températures, et dans lequel procédé l'étape (b) se déroule à une température T_{R} d'au moins 200 à 230 °C pendant un laps de temps t_{R} qui vaut au moins 4 minutes à 200 °C et au moins 2 minutes à une température d'au moins 230 °C, ce laps de temps étant donné par l'équation t_{R} = 4 - (T_{R} - 200).0,1.

6. Procédé conforme à l'une des revendications 1 à 5, dans lequel au moins un polysulfonylazide possède une structure représentée par la formule X-R-X où chaque symbole X représente un groupe -SO₂N₃ et R représente un groupe hydrocarbyle, un groupe dérivé d'un éther d'hydrocarbyle ou un groupe silicié, sans aucun substituant ou à substituant(s) inerte(s), lequel polysulfonylazide comporte d'au moins 3 à 50 atomes de carbone, de silicium ou d'oxygène placés entre les groupes sulfonylazide, et le groupe représenté par R comporte au moins un groupe aryle placé entre les groupes sulfonylazide.

7. Procédé de préparation d'une polyoléfine à propriétés rhéologiques modifiées; **caractérisé par** l'étape consistant:
a) à chauffer un mélange pratiquement homogène d'une polyoléfine et d'un polysulfonylazide, utilisé en une quantité telle qu'il a pour effet de modifier les propriétés rhéologiques, à une température, appelée ci-après "température de réaction", qui est au moins égale à la température de décomposition du polysulfonylazide ;
et dans lequel procédé la polyoléfirie comprend un mélange d'au moins un polymère non-élastomère et d'au moins un polymère élastomère, le polymère non-élastomère est un polymère de propylène, le polymère élastomère comporte au moins 40 % en poids de motifs répétés d'éthylène, le rapport pondéral du polymère non-élastomère au polymère élastomère vaut de 0,75 à 0,15, et le polysulfonylazide est utilisé en une quantité suffisante pour augmenter la résistance au choc du mélange ou pour améliorer la dispersion d'au moins un polymère dans le mélange.

8. Procédé de préparation d'une polyoléfine à propriétés rhéologiques modifiées, **caractérisé par** l'étape consistant :
a) à chauffer un mélangé pratiquement homogène d'un polymère de propylène dont la masse molaire est supérieure à 100 000, mais inférieure à environ 250 000, et d'un polysulfonylazide, utilisé en une quantité telle qu'il a pour effet, de modifier les propriétés rhéologiques, à une température, appelée ci-après "température de réaction", qui est au moins égale à la température de décomposition du polysulfonylazide.

9. Composition mélangée, comprenant une composition obtenue selon un procédé conforme à l'une des revendications 1 à 8 et au moins un polymère supplémentaire.

10. Utilisation d'une composition conforme à la revendication 9 dans un procédé de thermoformage, moulage par injection, extrusion, revêtement par extrusion, coulée, moulage par soufflage, moussage, formation de film ou soufflage.

11. Article qui est un article obtenu par thermoformage, moulage par injection, extrusion, coulée, moulage par soufflage, soufflage, moussage ou moulage d'une composition conforme à la revendication 9 ou du produit d'une utilisation conforme à la revendication 10.

12. Article qui est une mousse, un film ou une fibre fait d'une composition conforme à la revendication 9 ou du produit d'une utilisation conforme à la revendication 10.

13. Article conforme à la revendication 11 ou 12, qui est un revêtement de plateau de pick-up ou une pièce, une cuve ou un récipient pour appareil frigorifique.

14. Procédé conforme à la revendication 1, dans lequel l'extrudeuse comporte un moyen d'introduction, une sortie et un point médian entre le moyen d'introduction et la sortie, et dans lequel l'extrudeuse comporte plus d'éléments de malaxage à taux de cisaillement élevé entre le moyen d'introduction et le point médian qu'entre le point médian et la sortie.
